# EUROPÄISCHE PATENTSCHRIFT

(11) **EP 4 170 090 B1**
(45) Veröffentlichungstag und Bekanntmachung des Hinweises auf die Patenterteilung: **10.07.2024**
(21) Anmeldenummer: 22196445.5
(22) Anmeldetag: 20.09.2022
(51) Int. Cl.: E01C 19/26, B60K 17/10

(54) **BODENBEARBEITUNGSMASCHINE UND VERFAHREN ZUM BETREIBEN EINER BODENBEARBEITUNGSMASCHINE**
SOIL WORKING MACHINE AND METHOD FOR OPERATING A SOIL WORKING MACHINE
MACHINE DE TRAVAIL DU SOL ET PROCÉDÉ DE FONCTIONNEMENT D'UNE MACHINE DE TRAVAIL DU SOL

(30) Priorität: 22.10.2021 DE 102021127442
(43) Veröffentlichungstag der Anmeldung: 26.04.2023
(73) Patentinhaber: Hamm AG, 95643 Tirschenreuth (DE)
(72) Erfinder: Klein, Thomas, Mitterteich (DE); Braunschläger, Stefan, Bärnau (DE); Pieske, Ronny, Zwönitz (DE); Sperber, Michael, Waldsassen (DE); Dagner, Josef, Altenstadt (DE)
(74) Vertreter: Ruttensperger Lachnit Trossin Gomoll

(56) Entgegenhaltungen:
- EP-A1- 3 879 137
- WO-A1-2015/034499
- CN-A- 110 154 773
- DE-A1- 102011 116 875
- US-A- 4 644 849
- US-A1- 2009 127 928

## Beschreibung

Die vorliegende Erfindung betrifft eine Bodenbearbeitungsmaschine, die beispielsweise als Bodenverdichter ausgebildet sein kann, um einen Untergrund, wie zum Beispiel Asphaltmaterial, Geröll oder Erdreich, zu verdichten. Derartige Bodenbearbeitungsmaschinen können beispielsweise auch als Radlader, Bagger Fräsmaschinen oder landwirtschaftliche Maschinen ausgebildet sein.

Zum Vermeiden des Einsatzes fossiler Brennstoffe in Bodenbearbeitungsmaschinen kann die in einer derartigen Bodenbearbeitungsmaschine erforderliche Energie insbesondere auch zum Antrieb der Bodenbearbeitungsmaschine zum Bewegen über den zu bearbeitenden Boden durch einen oder mehrere aus einer oder mehreren Batterien gespeisten Elektromotoren bereitgestellt werden. Die Übertragung der Antriebsenergie auf eine oder mehrere Antriebsrollen kann über einen Hydraulikkreislauf realisiert werden, welcher eine oder mehrere von einem oder mehreren Elektromotoren angetriebene Fahr-Hydraulikpumpen sowie in Zuordnung zu jeder Antriebsrolle einen oder mehrere Fahr-Hydraulikmotoren umfassen kann.

Eine Bodenbearbeitungsmaschine gemäß dem Oberbegriff des Anspruchs 1 ist aus der WO 2015/034499 A1 bekannt. Bei dieser Bodenbearbeitungsmaschine ist zum Erzeugen eines unterstützenden Bremsmoments in einem Leitungsbereich eines Fahr-Hydraulikkreislaufs zwischen einem der Verbindungsanschlüsse einer Fahr-Hydraulikpumpe und zwei Fahr-Hydraulikmotoren sowie in einem Leitungsbereich des Fahr-Hydraulikkreislaufs zwischen dem anderen der Verbindungsanschlüsse der Fahr-Hydraulikpumpe und den beiden Fahr-Hydraulikmotoren jeweils eine zum Unterbrechen bzw. Freigeben einer Strömungsverbindung ansteuerbare Ventilanordnung vorgesehen.

Die US 2009/0127928 A1 offenbart eine Arbeitsmaschine, bei welcher ein Fahr-Hydraulikkreislauf zwei von einer Fahr-Hydraulikpumpe mit variablem Fördervolumen mit Druckfluid speisbare Fahr-Hydraulikmotoren mit variablem Schluckvolumen umfasst. In einem der die Fahr-Hydraulikpumpe mit den beiden Fahr-Hydraulikmotoren verbindenden Leitungsbereiche ist in Zuordnung zu jedem Fahr-Hydraulikmotor eine zum Unterbrechen bzw. Freigeben einer Strömungsverbindung ansteuerbare Ventilanordnung vorgesehen.

Die DE 10 2011 116 875 A1 offenbart einen hydrostatischen Einzelradantrieb, bei welchem jedem von vier angetriebenen Rädern jeweils ein Fahr-Hydraulikmotor mit variablem Schluckvolumen zugeordnet ist. Alle Fahr-Hydraulikmotoren werden von einer Fahr-Hydraulikpumpe mit variablem Fördervolumen mit Druckfluid gespeist. In einem der die Fahr-Hydraulikpumpe mit den vier Fahr-Hydraulikmotoren verbindenden Leitungsbereiche ist in Zuordnung zu jedem Fahr-Hydraulikmotor jeweils eine zum Unterbrechen bzw. Freigeben einer Strömungsverbindung ansteuerbare Ventilanordnung vorgesehen.

Die US 4 644 849 A offenbart ein Hydrauliksystem mit einer Hydraulikpumpe, die in einem offenen Kreislauf Druckfluid wahlweise zu einem der beiden Verbindungsanschlüsse eines Hydraulikmotors leitet. In jeder der das Druckfluid zu jeweils einem der Verbindungsanschlüsse des Hydraulikmotors leitenden Hydraulikleitungen ist eine zum Unterbrechen bzw. Freigeben einer Strömungsverbindung ansteuerbare Ventilanordnung vorgesehen.

Die EP 3 879 137 A1 offenbart ein hydrostatisches Getriebe für eine Arbeitsmaschine, bei welchem jeder der beiden Verbindungsanschlüsse einer Fahr-Hydraulikpumpe mit variablem Fördervolumen über jeweils einen Leitungsbereich mit einem der beiden Verbindungsanschlüsse eines Fahr-Hydraulikmotors mit variablem Schluckvolumen verbunden ist. Jedem der beiden Leitungsbereiche ist ein Drucksensor zum Erfassen des Fluiddrucks zugeordnet. Zum Realisieren einer Wegrollsicherung werden abhängig von den Drucksignalen und abhängig von einer erfassten Bewegungsgeschwindigkeit der Arbeitsmaschine die Fahr-Hydraulikpumpe und der Fahr-Hydraulikmotor bei nicht betätigtem Gaspedal so angesteuert, dass eine Fluidströmung unterbunden wird.

Die CN 110 154 773 A offenbart ein hydraulisches Antriebssystem für ein Fahrzeug mit einem ersten Hydraulikpumpe/motor-Aggregat mit variablem Förder/SchluckVolumen und einem über zwei Leitungsbereiche mit dem ersten Hydraulikpumpe/motor-Aggregat verbundenen zweiten Hydraulikpumpe/motor-Aggregat mit variablem Förder/Schluck-Volumen. In einem der beiden Leitungsbereiche ist ein zum Freigeben und Unterbrechen der Strömungsverbindung ansteuerbare Ventilanordnung vorgesehen.

Es ist die Aufgabe der vorliegenden Erfindung, eine derartige Bodenbearbeitungsmaschine und ein Verfahren zum Betreiben einer derartigen Bodenbearbeitungsmaschine bereitzustellen, mit welchen ein optimiertes Betriebsverhalten des elektrohydraulischen Antriebssystems erreichbar ist.

Erfindungsgemäß wird diese Aufgabe gelöst durch eine Bodenbearbeitungsmaschine, insbesondere Bodenverdichter, umfassend wenigstens eine zur Drehung angetriebene Antriebsrolle und ein elektrohydraulisches Antriebssystem zum Antreiben wenigstens einer Antriebsrolle, wobei das elektrohydraulische Antriebssystem einen Fahr-Hydraulikkreislauf mit jeweils wenigstens einem Fahr-Hydraulikmotor in Zuordnung zu wenigstens einer, vorzugsweise jeder Antriebsrolle und wenigstens einer durch einen Elektromotor angetriebenen Fahr-Hydraulikpumpe zum Fördern von Fluid in dem Fahr-Hydraulikkreislauf umfasst, wobei der Fahr-Hydraulikkreislauf einen ersten Leitungsbereich zwischen einem ersten Verbindungsanschluss der wenigstens einen Fahr-Hydraulikpumpe und einem jeweiligen ersten Verbindungsanschluss jedes Fahr-Hydraulikmotors zum Fördern von Fluid zu jedem Fahr-Hydraulikmotor zum Antreiben der wenigstens einen Antriebsrolle in einer ersten Drehrichtung sowie einen zweiten Leitungsbereich zwischen einem zweiten Verbindungsanschluss der wenigstens einen Fahr-Hydraulikpumpe und einem jeweiligen zweiten Verbindungsanschluss jedes Fahr-Hydraulikmotors zum Fördern von Fluid zu jedem Fahr-Hydraulikmotor zum Antreiben der wenigstens einen Antriebsrolle in einer der ersten Drehrichtung entgegengesetzten zweiten Drehrichtung umfasst, wobei in Zuordnung zu jedem Leitungsbereich eine Ventilanordnung zum wahlweisen Unterbrechen und Freigeben einer Fluidströmungsverbindung zwischen der wenigstens einen Fahr-Hydraulikpumpe und wenigstens einem Fahr-Hydraulikmotor vorgesehen ist.

Um unter Berücksichtigung der im Fahr-Hydraulikkreislauf vorherrschenden Druckverhältnisse insbesondere beim Übergang von einem Stillstandzustand in einen Antriebszustand den Elektromotor oder/und die Ventilanordnungen ansteuern zu können, ist in Zuordnung zu der im ersten Leitungsbereich angeordneten Ventilanordnung eine erste Drucksensoranordnung vorgesehen, wobei die erste Drucksensoranordnung wenigstens einen Drucksensor zum Erfassen eines Fluiddrucks in einem Leitungsabschnitt des ersten Leitungsbereichs zwischen dem ersten Verbindungsanschluss der wenigstens einen Fahr-Hydraulikpumpe und der im ersten Leitungsbereich angeordneten Ventilanordnung und wenigstens einen Drucksensor zum Erfassen eines Fluiddrucks in einem Leitungsabschnitt des ersten Leitungsbereichs zwischen der im ersten Leitungsbereich angeordneten Ventilanordnung und dem wenigstens einen Fahr-Hydraulikmotor umfasst, oder/und ist in Zuordnung zu der im zweiten Leitungsbereich angeordneten Ventilanordnung eine zweite Drucksensoranordnung vorgesehen, wobei die zweite Drucksensoranordnung wenigstens einen Drucksensor zum Erfassen eines Fluiddrucks in einem Leitungsabschnitt des zweiten Leitungsbereichs zwischen dem zweiten Verbindungsanschluss der wenigstens einen Fahr-Hydraulikpumpe und der im zweiten Leitungsbereich angeordneten Ventilanordnung und wenigstens einen Drucksensor zum Erfassen eines Fluiddrucks in einem Leitungsabschnitt des zweiten Leitungsbereichs zwischen der im zweiten Leitungsbereich angeordneten Ventilanordnung und dem wenigstens einen Fahr-Hydraulikmotor umfasst.

Das Vorsehen derartiger Ventilanordnungen in Strömungsrichtung eines Fluids, zum Beispiel Hydrauliköl, in dem Fahr-Hydraulikkreislauf beidseits des wenigstens einen Fahr-Hydraulikmotors gestattet es, durch gezielte Ansteuerung der Ventilanordnungen den Energiefluss in den bzw. in dem Fahr-Hydraulikreislauf bzw. aus dem Fahr-Hydraulikkreislauf zu optimieren. So kann beispielsweise in einem Bremszustand dann, wenn das durch den in diesem Zustand als Generator zur Energierückspeisung betriebenen Elektromotor bereitgestellte Bremsmoment nicht ausreicht, um eine Bodenbearbeitungsmaschine im vorgesehenen Ausmaß zu verzögern, durch Drosselung des Fluidstroms im Fahr-Hydraulikkreislauf ein zusätzliches Bremsmoment generiert werden, so dass auch eine Überlastung des als Generator arbeitenden Elektromotors und der aus diesem gespeisten Batterie vermieden werden kann. Da in Strömungsrichtung beidseits des wenigstens einen Fahr-Hydraulikmotors eine derartige Ventilanordnung vorgesehen ist, kann dieser Effekt unabhängig davon, in welcher Richtung eine Bodenbearbeitungsmaschine bewegt wird, genutzt werden. Auch kann bei einer derart aufgebauten Bodenbearbeitungsmaschine durch aufeinander abgestimmte Ansteuerung des Elektromotors einerseits und der Ventilanordnungen andererseits dafür gesorgt werden, dass beim Übergang in einen Fahrzustand bei beispielsweise an einem Gefälle stehender Bodenbearbeitungsmaschine ein Wegrollen derselben in Richtung hangabwärts vermieden wird. Hierzu kann vor dem Freigeben der Strömungsverbindung zunächst ein derartiger Fluiddruck aufgebaut werden, welcher das Wegrollen verhindert. Erst dann, wenn ein derartiger Fluiddruck aufgebaut ist, wird die Fluidströmung freigegeben und durch weitere Erhöhung des Fluiddrucks die Bodenbearbeitungsmaschine voran bewegt. Auch bei Erkennen eines Schlupfzustands von einer der Antriebsrollen kann bei einer erfindungsgemäß aufgebauten Bodenbearbeitungsmaschine durch gezielte Einwirkung auf die Fluidströmung zu den verschiedenen Antriebsrollen zugeordneten Fahr-Hydraulikmotoren dafür gesorgt werden, dass die Drehzahlen der Antriebsrollen zueinander im Wesentlichen gleich gehalten werden bzw. im Bereich eines für einen im Wesentlichen schlupffreien Betrieb vorgesehenen Verhältnisses gehalten werden.

Für eine gleichmäßige Verteilung der Antriebsenergie wird vorgeschlagen, dass eine Mehrzahl von Antriebsrollen vorgesehen ist und jeder Antriebsrolle ein Fahr-Hydraulikmotor zugeordnet ist, wobei der erste Leitungsbereich in Zuordnung zu jedem Fahr-Hydraulikmotor eine eine Fluidströmungsverbindung mit dem ersten Verbindungsanschluss der wenigstens einen Fahr-Hydraulikpumpe bereitstellende erste Motor-Zweigleitung umfasst und der zweite Leitungsbereich in Zuordnung zu jedem Fahr-Hydraulikmotor eine eine Fluidströmungsverbindung mit dem zweiten Verbindungsanschluss der wenigstens einen Fahr-Hydraulikpumpe bereitstellende zweite Motor-Zweigleitung umfasst.

Bei einer baulich einfach ausgeführten Ausgestaltung kann die in Zuordnung zum ersten Leitungsbereich vorgesehene Ventilanordnung eine erste Ventileinheit umfassen, wobei die erste Ventileinheit in Zuordnung zum ersten Leitungsbereich zum wahlweisen Unterbrechen und Freigeben der Fluidströmungsverbindung zwischen der wenigstens einen Fahr-Hydraulikpumpe und jedem Fahr-Hydraulikmotor angeordnet ist, oder/und kann die in Zuordnung zum zweiten Leitungsbereich vorgesehene Ventilanordnung eine zweite Ventileinheit umfassen, wobei die zweite Ventileinheit in Zuordnung zum zweiten Leitungsbereich zum wahlweisen Unterbrechen und Freigeben der Fluidströmungsverbindung zwischen der wenigstens einen Fahr-Hydraulikpumpe und jedem Fahr-Hydraulikmotor angeordnet ist. In jedem der Leitungsbereiche genügt somit eine einzige Ventileinheit um auf den Fluidstrom einzuwirken, also diesen zu unterbrechen, freizugeben oder zu drosseln.

Es ist in diesem Zusammenhang darauf hinzuweisen, dass im Kontext der vorliegenden Erfindung das wahlweise Unterbrechen und Freigeben einer Fluidströmungsverbindung vermittels einer Ventilanordnung bzw. einer Ventileinheit bedeutet, dass der Fluidstrom durch die Ventilanordnung bzw. Ventileinheit in einer Sperrstellung derselben vollständig unterbrochen werden kann, so dass kein Fluid durch den jeweiligen Leitungsbereich oder eine Zweigleitung strömt, dass der Fluidstrom durch die Ventilanordnung bzw. Ventileinheit in einer Offenstellung derselben in maximal möglichem Ausmaß freigegeben werden kann, bzw. dass der Fluidstrom durch die Ventilanordnung bzw. Ventileinheit in einer Drosselstellung derselben gedrosselt werden kann, so dass ein unter dem in der Offenstellung maximal möglichen Fluidstrom liegender Fluidstrom erreicht wird.

Sind mehrere Fahr-Hydraulikmotoren vorgesehen, kann der erste Leitungsbereich eine die ersten Motor-Zweigleitungen mit dem ersten Verbindungsanschluss der wenigstens einen Fahr-Hydraulikpumpe verbindende erste Hauptleitung umfassen, und die erste Ventileinheit kann zur Realisierung eines einfachen Aufbaus in Zuordnung zur ersten Hauptleitung angeordnet sein. Weiter kann dazu vorgesehen sein, dass der zweite Leitungsbereich eine die zweiten Motor-Zweigleitungen mit dem zweiten Verbindungsanschluss der wenigstens einen Fahr-Hydraulikpumpe verbindende zweite Hauptleitung umfasst und die zweite Ventileinheit in Zuordnung zur zweiten Hauptleitung angeordnet ist.

Bei einer alternativen Ausgestaltung kann die im ersten Leitungsbereich vorgesehene Ventilanordnung in Zuordnung zu jedem Fahr-Hydraulikmotor jeweils eine erste Ventileinheit zum wahlweisen Unterbrechen und Freigeben der Fluidströmungsverbindung zwischen der Fahr-Hydraulikpumpe und dem jeweils zugeordneten Fahr-Hydraulikmotor umfassen, so dass jeder Fahr-Hydraulikmotor durch entsprechende Ansteuerung der diesem zugeordneten ersten Ventileinheit eigenständig hinsichtlich des zu diesem oder von diesem weg zu leitenden Fluidstroms eingestellt werden kann. Entsprechend kann die im zweiten Leitungsbereich vorgesehene Ventilanordnung in Zuordnung zu jedem Fahr-Hydraulikmotor jeweils eine zweite Ventileinheit zum wahlweisen Unterbrechen und Freigeben der Fluidströmungsverbindung zwischen der Fahr-Hydraulikpumpe und dem jeweils zugeordneten Fahr-Hydraulikmotor umfassen.

Für eine individuelle Fluidzuleitung bzw. Fluidableitung zu den bzw. von den verschiedenen Fahr-Hydraulikmotoren wird vorgeschlagen, dass bei jedem Fahr-Hydraulikmotor die diesem Fahr-Hydraulikmotor zugeordnete erste Ventileinheit in Zuordnung zu der diesen Fahr-Hydraulikmotor mit dem ersten Verbindungsanschluss der wenigstens einen Fahr-Hydraulikpumpe verbindenden ersten Motor-Zweigleitung angeordnet ist, oder/und dass bei jedem Fahr-Hydraulikmotor die diesem Fahr-Hydraulikmotor zugeordnete zweite Ventileinheit in Zuordnung zu der diesen Fahr-Hydraulikmotor mit dem zweiten Verbindungsanschluss der wenigstens einen Fahr-Hydraulikpumpe verbindenden zweiten Motor-Zweigleitung angeordnet ist.

Der erste Leitungsbereich kann eine die ersten Motor-Zweigleitungen mit dem ersten Verbindungsanschluss der wenigstens einen Fahr-Hydraulikpumpe verbindende erste Hauptleitung umfassen. Ferner kann der zweite Leitungsbereich eine die zweiten Motor-Zweigleitungen mit dem zweiten Verbindungsanschluss der wenigstens einen Fahr-Hydraulikpumpe verbindende zweite Hauptleitung umfassen.

Für eine definierte Einstellung eines Fluidstroms durch eine Ventileinheit hindurch bzw. der durch eine Ventileinheit bereitzustellenden Drosselwirkung wird vorgeschlagen, dass wenigstens eine erste Ventileinheit oder/und wenigstens eine zweite Ventileinheit ein Proportionalventil umfasst.

Bei einer baulich einfach zu realisierenden Ausgestaltung kann vorgesehen sein, dass wenigstens eine erste Ventileinheit oder/und wenigstens eine zweite Ventileinheit unter der Ansteuerung einer Ansteuereinheit steht und durch die Ansteuereinheit zum wahlweisen Unterbrechen und Freigeben der Fluidströmungsverbindung zwischen der wenigstens einen Fahr-Hydraulikpumpe und wenigstens einem Fahr-Hydraulikmotor ansteuerbar ist.

Bei einer weiteren Ausgestaltung kann wenigstens eine erste Ventileinheit oder/und wenigstens eine zweite Ventileinheit druckgesteuert sein, wobei in Zuordnung zu jeder druckgesteuerten ersten Ventileinheit und jeder druckgesteuerten zweiten Ventileinheit ein unter der Ansteuerung einer Ansteuereinheit stehendes Ansteuerventil vorgesehen ist zum Anlegen eines Steuerdrucks an die zugeordnete Ventileinheit von erster Ventileinheit und zweiter Ventileinheit zum wahlweisen Unterbrechen und Freigeben der Fluidströmungsverbindung zwischen der wenigstens einen Fahr-Hydraulikpumpe und wenigstens einem Fahr-Hydraulikmotor. Auch ein derartiges unter der Ansteuerwirkung der Ansteuereinheit stehendes Ansteuerventil kann beispielsweise als Proportionalventil ausgebildetes sein, um entsprechend dem Ausmaß, in welchem eine zugeordnete erste Ventileinheit oder zweite Ventileinheit zum Unterbrechen der Fluidströmungsverbindung aktiv sein soll, einen geeigneten Ansteuerdruck an diese anzulegen.

Zum Erhöhen der Betriebssicherheit kann wenigstens eine erste Ventileinheit oder/und wenigstens eine zweite Ventileinheit eine Normal-Geschlossen-Ventileinheit sein. Somit ist beispielsweise gewährleistet, dass bei Auftreten eines Druckabfalls oder eines Stromausfalls automatisch die Fluidströmungsverbindung zu einem oder mehreren Fahr-Hydraulikmotoren unterbrochen wird und somit eine Bodenbearbeitungsmaschine zum Stillstand gebracht wird.

Um das Auftreten übermäßig hoher Fluiddrücke in dem elektrohydraulischen Antriebssystem zu vermeiden, wird weiter vorgeschlagen, dass die in Zuordnung zum ersten Leitungsbereich vorgesehene Ventilanordnung wenigstens ein Überdruckventil zum Rückspeisen von Fluid zu dem Fahr-Hydraulikmotor bei Überschreiten eines Fluid-Grenzdrucks im ersten Leitungsbereich umfasst, oder/und dass die in Zuordnung zum zweiten Leitungsbereich vorgesehene Ventilanordnung wenigstens ein Überdruckventil zum Rückspeisen von Fluid zu dem wenigstens einen Fahr-Hydraulikmotor bei Überschreiten eines Fluid-Grenzdrucks im zweiten Leitungsbereich umfasst.

Dabei kann beispielsweise die in Zuordnung zum ersten Leitungsbereich vorgesehene Ventilanordnung in Zuordnung zu einem Leitungsabschnitt des ersten Leitungsbereich zwischen der wenigstens einen Fahr-Hydraulikpumpe und jeder ersten Ventileinheit ein erstes Überdruckventil umfassen und in Zuordnung zu einem Leitungsabschnitt zwischen jeder ersten Ventileinheit und dem wenigstens einen Fahr-Hydraulikmotor ein zweites Überdruckventil umfassen. Weiter kann die in Zuordnung zum zweiten Leitungsbereich vorgesehene Ventilanordnung in Zuordnung zu einem Leitungsabschnitt des zweiten Leitungsbereich zwischen der wenigstens einen Fahr-Hydraulikpumpe und jeder zweiten Ventileinheit ein drittes Überdruckventil umfassen und in Zuordnung zu einem Leitungsabschnitt zwischen jeder zweiten Ventileinheit und dem wenigstens einen Fahr-Hydraulikmotor ein viertes Überdruckventil umfassen.

Um bei jedem Fahr-Hydraulikmotor die Druckverhältnisse berücksichtigen zu können, wird vorgeschlagen, dass die erste Drucksensoranordnung in Zuordnung zu jeder ersten Motor-Zweigleitung jeweils einen Drucksensor zum Erfassen eines Fluiddrucks in einem Leitungsabschnitt einer jeweiligen ersten Motor-Zweigleitung zwischen der dieser zugeordneten ersten Ventileinheit und dem dieser zugeordneten Fahr-Hydraulikmotor umfasst, oder/und dass die zweite Drucksensoranordnung in Zuordnung zu jeder zweiten Motor-Zweigleitung jeweils einen Drucksensor zum Erfassen eines Fluiddrucks in einem Leitungsabschnitt einer jeweiligen zweiten Motor-Zweigleitung zwischen der dieser zugeordneten zweiten Ventileinheit und dem dieser zugeordneten Fahr-Hydraulikmotor umfasst.

Zur Berücksichtigung des Drehverhaltens der verschiedenen Antriebsrollen insbesondere für eine Antischlupfregelung kann in Zuordnung zu wenigstens einer, vorzugsweise jeder Antriebsrolle jeweils ein Drehzahlsensor vorgesehen sein zum Bereitstellen von eine Drehzahl einer jeweiligen Antriebsrolle repräsentierender Drehzahlinformation.

Abhängig von der Ausgestaltung einer jeweiligen Bodenbearbeitungsmaschine kann die an dieser vorgesehene Antriebsrolle bzw. können die an dieser vorgesehenen Antriebsrollen verschieden ausgeführt sein. So kann beispielsweise wenigstens eine Antriebsrolle eine Bodenbearbeitungswalze mit einem Metallmantel umfassen.

Derartige Bodenbearbeitungswalzen werden beispielsweise eingesetzt, um das Aufbaumaterial eines Bodens zu verdichten oder gegebenenfalls zu zerkleinern. Weiter kann wenigstens eine Antriebsrolle wenigstens ein Antriebsrad, vorzugsweise ein Antriebsradpaar, umfassen. Bei einer weiteren Ausgestaltung kann wenigstens eine Antriebsrolle wenigstens eine Gummiradwalze, vorzugsweise ein Gummiradwalzenpaar, umfassen. Derartige als Gummiradwalzen ausgeführte Antriebsrollen werden, ebenso wie mit einem Metallmantel ausgeführte Bodenbearbeitungswalzen, beispielsweise zum Verdichten von Asphaltmaterial eingesetzt.

Gemäß einem weiteren Aspekt wird die eingangs genannte Aufgabe gelöst durch ein Verfahren zum Betreiben einer erfindungsgemäßen Bodenbearbeitungsmaschine, umfassend zum Verhindern des Wegrollens einer auf einem geneigten Untergrund stehenden Bodenbearbeitungsmaschine beim Übergang in einen Antriebszustand die Maßnahmen:
c) in einem Stillstandzustand, Stellen der im ersten Leitungsbereich angeordneten Ventilanordnung in einen die Fluidströmung im ersten Leitungsbereich unterbrechenden Sperrzustand und Stellen der im zweiten Leitungsbereich angeordneten Ventilanordnung in einen die Fluidströmung im zweiten Leitungsbereich unterbrechenden Sperrzustand,
d) in dem Stillstandzustand, Erfassen eines ersten Fluiddrucks in einem Leitungsabschnitt des ersten Leitungsbereichs zwischen der im ersten Leitungsbereich angeordneten Ventilanordnung und dem wenigstens einen Fahr-Hydraulikmotor und Erfassen eines zweiten Fluiddrucks in einem Leitungsabschnitt des zweiten Leitungsbereichs zwischen der im zweiten Leitungsbereich angeordneten Ventilanordnung und dem wenigstens einen Fahr-Hydraulikmotor,
e) bei Beendigung des Stillstandzustandes zum Übergang in einen Antriebszustand, Ansteuern des der wenigstens einen Fahr-Hydraulikpumpe zugeordneten Elektromotors unter Berücksichtigung des bei der Maßnahme d) erfassten ersten Fluiddrucks oder des bei der Maßnahme d) erfassten zweiten Fluiddrucks.

Zum Bereitstellen eines Bremsmoments kann das Verfahren ferner folgende Maßnahmen umfassen:
a) in einem Antriebszustand, Antreiben der wenigstens einen Fahr-Hydraulikpumpe derart, dass Fluid über einen Leitungsbereich von erstem Leitungsbereich und zweitem Leitungsbereich zu dem wenigstens einen Fahr-Hydraulikmotor gefördert wird und Fluid über den anderen Leitungsbereich von erstem Leitungsbereich und zweitem Leitungsbereich zu der wenigstens einen Fahr-Hydraulikpumpe zurückströmt,
b) in einem auf den Antriebszustand folgenden Bremszustand, Unterbrechen oder Drosseln einer Fluidströmung in dem anderen Leitungsbereich vermittels der in dem anderen Leitungsbereich angeordneten Ventilanordnung.

Zum Vermeiden unnötiger Energieverluste im Antriebszustand können bei der Maßnahme a) die im ersten Leitungsbereich angeordnete Ventilanordnung in einem die Fluidströmung im ersten Leitungsbereich im Wesentlichen nicht drosselnden Offenzustand sein und die im zweiten Leitungsbereich angeordnete Ventilanordnung in einem die Fluidströmung im zweiten Leitungsbereich im Wesentlichen nicht drosselnden Offenzustand sein.

Um die Richtung, in welcher eine auf einem geneigten Untergrund stillstehende Bodenbearbeitungsmaschine beim Öffnen der Ventilanordnungen wegrollen würde, berücksichtigen zu können, wird vorgeschlagen, dass bei der Maßnahme e) der der wenigstens einen Fahr-Hydraulikpumpe zugeordnete Elektromotor unter Berücksichtigung des höheren Fluiddrucks von erstem Fluiddruck und zweitem Fluiddruck angesteuert wird.

Das Wegrollen einer Bodenbearbeitungsmaschine auf einem geneigten Untergrund beim Übergang in einen Antriebszustand kann dadurch vermieden werden, dass bei der Maßnahme d) oder/ und der Maßnahme e) ein dritter Fluiddrucks in einem Leitungsabschnitt des ersten Leitungsbereichs zwischen der wenigstens einen Fahr-Hydraulikpumpe und der im ersten Leitungsbereich angeordneten Ventilanordnung oder/und ein vierter Fluiddruck in einem Leitungsabschnitt des zweiten Leitungsbereichs zwischen der wenigstens einen Fahr-Hydraulikpumpe und der im zweiten Leitungsbereich angeordneten Ventilanordnung erfasst wird, und dass bei der Maßnahme e) dann, wenn der erste Fluiddruck höher ist als der zweite Fluiddruck, der der wenigstens einen Fahr-Hydraulikpumpe zugeordnete Elektromotor derart zum Fördern von Fluid in den ersten Leitungsbereich angesteuert wird, dass der dritte Fluiddruck im Wesentlichen dem ersten Fluiddruck entspricht, und dass bei der Maßnahme e) dann, wenn der zweite Fluiddruck höher ist als der erste Fluiddruck, der der wenigstens einen Fahr-Hydraulikpumpe zugeordnete Elektromotor derart zum Fördern von Fluid in den zweiten Leitungsbereich angesteuert wird, dass der vierte Fluiddruck im Wesentlichen dem zweiten Fluiddruck entspricht.

Dabei ist es weiter vorteilhaft, wenn bei der Maßnahme e) die Ventilanordnungen dann aus dem Sperrzustand in einen Offenzustand gestellt werden, wenn der dritte Fluiddruck im Wesentlichen dem ersten Fluiddruck entspricht oder wenn der vierte Fluiddruck im Wesentlichen dem zweiten Fluiddruck entspricht. Somit werden erst dann die Fahr-Hydraulikmotoren zur Bewegung freigegeben, wenn im Fahr-Hydraulikkreislauf ein das Wegrollen verhindernder Fluiddruck aufgebaut ist

Um nach dem Öffnen der beiden Ventilanordnungen eine Bodenbearbeitungsmaschine in Bewegung zu versetzen, kann nach dem Stellen der ersten Ventilanordnung und der zweiten Ventilanordnung in den Offenzustand der der wenigstens einen Fahr-Hydraulikpumpe zugeordnete Elektromotor zum weiteren Erhöhen des Fluiddrucks angesteuert werden.

Zum Verhindern eines Schlupfzustandes bei einer Antriebsrolle kann das Verfahren ferner folgende Maßnahmen umfassen:
f) in einem Antriebszustand, Antreiben der wenigstens einen Fahr-Hydraulikpumpe derart, dass Fluid über einen Leitungsbereich von erstem Leitungsbereich und zweitem Leitungsbereich zu einem einer ersten Antriebsrolle zugeordneten ersten Fahr-Hydraulikmotor und zu einem einer zweiten Antriebsrolle zugeordneten zweiten Fahr-Hydraulikmotor gefördert wird und Fluid über den anderen Leitungsbereich von erstem Leitungsbereich und zweitem Leitungsbereich von dem ersten Fahr-Hydraulikmotor und dem zweiten Fahr-Hydraulikmotor zu der wenigstens einen Fahr-Hydraulikpumpe zurückströmt,
g) in dem Antriebszustand, Bereitstellen einer Schlupfzustandsinformation auf der Grundlage einer eine Drehzahl der ersten Antriebsrolle repräsentierenden ersten Drehzahlinformation oder/und einer eine Drehzahl der zweiten Antriebsrolle repräsentierenden zweiten Drehzahlinformation,
h) dann, wenn die Schlupfzustandsinformation bei einer Antriebsrolle von erster Antriebsrolle und zweiter Antriebsrolle im Vergleich zur anderen Antriebsrolle von erster Antriebsrolle und zweiter Antriebsrolle eine zu hohe Drehzahl indiziert, Drosseln des Fluidstroms zu dem der einen Antriebsrolle zugeordneten Fahr-Hydraulikmotor von erstem Fahr-Hydraulikmotor und zweitem Fahr-Hydraulikmotor vermittels der im ersten Leitungsbereich angeordneten Ventilanordnung oder/und der im zweiten Leitungsbereich angeordneten Ventilanordnung.

Bei der Maßnahme h) kann der Fluidstrom zu dem der einen Antriebsrolle zugeordneten Fahr-Hydraulikmotor von erstem Fahr-Hydraulikmotor und zweitem Fahr-Hydraulikmotor beispielsweise vermittels der im anderen Leitungsbereich von erstem Leitungsbereich und zweitem Leitungsbereich, also der stromabwärts eines jeweiligen Fahr-Hydraulikmotors im Fahr-Hydraulikkreislauf angeordneten Ventilanordnung, gedrosselt werden.

Für eine definierte Antischlupfregelung kann bei der Maßnahme h) die im ersten Leitungsbereich angeordnete Ventilanordnung oder/und die im zweiten Leitungsbereich angeordnete Ventilanordnung dann zum Drosseln des Fluidstroms zu dem der einen Antriebsrolle zugeordneten Fahr-Hydraulikmotor angesteuert werden, wenn eine Drehzahlinformation von erster Drehzahlinformation und zweiter Drehzahlinformation eine über einer Soll-Drehzahl der zugeordneten Antriebsrolle liegende Drehzahl indiziert, wobei die Soll-Drehzahl auf der Grundlage der ersten Drehzahlinformation oder/und der zweiten Drehzahlinformation bestimmt wird.

Weisen beide Antriebsrollen im Wesentlichen den gleichen Außendurchmesser auf, kann die Soll-Drehzahl beispielsweise der Drehzahl der mit geringerer Drehzahl rotierenden Antriebsrolle entsprechen. Weisen die beiden Antriebsrollen zueinander unterschiedliche Außendurchmesser auf, haben auch im schlupffreien Zustand die Antriebsrollen grundsätzlich unterschiedliche Drehzahlen. In diesem Falle kann die Soll-Drehzahl weiter unter Berücksichtigung eines Verhältnisses eines Außendurchmessers der ersten Antriebsrolle zu einem Außendurchmesser der zweiten Antriebsrolle bestimmt werden.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: eine Seitenansicht einer alternativen Ausgestaltungsart einer als Bodenverdichter ausgebildeten Bodenbearbeitungsmaschine;
- Fig. 3: ein elektrohydraulisches Antriebssystem für eine Bodenbearbeitungsmaschine;
- Fig. 4: eine alternative Ausgestaltung eines elektrohydraulischen Antriebssystems für eine Bodenbearbeitungsmaschine;
- Fig. 5: eine weitere alternative Ausgestaltung eines elektrohydraulischen Antriebssystems für eine Bodenbearbeitungsmaschine.

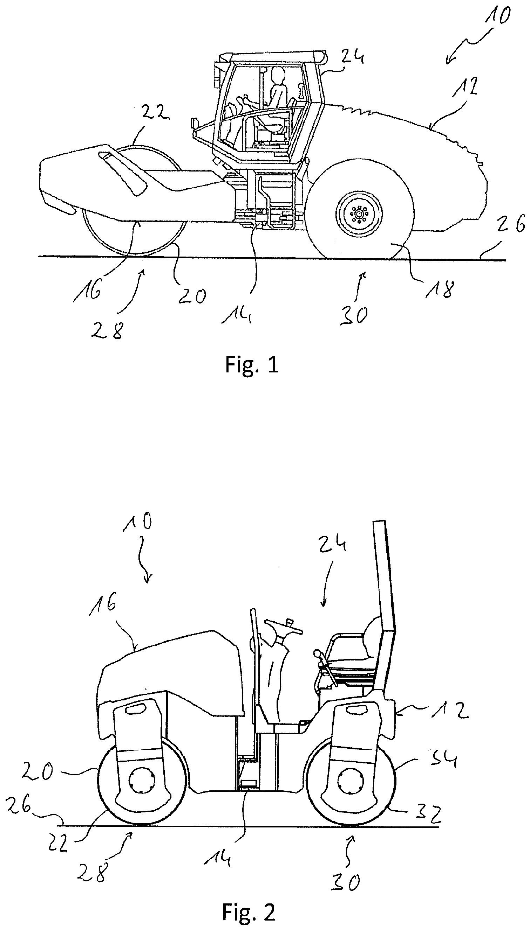

Eine in Fig. 1 dargestellte und in Form eines Bodenverdichters aufgebaute Bodenbearbeitungsmaschine 10 umfasst einen Hinterwagen 12 und einen in einem Gelenkverbindungsbereich 14 mit dem Hinterwagen 12 zum Lenken des Bodenverdichters schwenkbar verbundenen Vorderwagen 16. Am Hinterwagen 12 sind zwei durch ein nachfolgend beschriebenes elektrohydraulisches Antriebssystem zur Drehung angetriebene Antriebsräder 18 vorgesehen. Am Vorderwagen 16 ist eine durch das elektrohydraulische Antriebssystem zur Drehung angetriebene Bodenbearbeitungswalze 20 vorgesehen, welche im dargestellten Ausgestaltungsbeispiel einen radial außen glatten Metallmantel 22 aufweist und beispielsweise dazu eingesetzt werden kann, Asphaltmaterial, Erdreich, Geröll oder dergleichen zu verdichten. Am Hinterwagen 12 ist ferner ein Bedienstand 24 angeordnet. Im Bedienstand 24 kann eine Bedienperson Platz nehmen, welche im Bodenbearbeitungsbetrieb die Bodenbearbeitungsmaschine 10 zur Bewegung über dem zu bearbeitenden Boden 26 steuert.

Für die nachfolgende Erläuterung des Aufbaus und der Funktion des elektrohydraulischen Antriebssystems der Bodenbearbeitungsmaschine 10 wird angenommen, dass die am Vorderwagen 16 angeordnete Bodenbearbeitungswalze 20 eine erste Antriebsrolle 28 bereitstellt, während die beiden am Hinterwagen 12 vorgesehenen Antriebsräder 18 jeweils einzeln oder zusammen als eine zweite Antriebsrolle 30 betrachtet werden.

Eine alternative Ausgestaltungsart einer als Bodenverdichter ausgebildeten Bodenbearbeitungsmaschine 10 ist in Fig. 2 dargestellt. Bei dem in Fig. 2 dargestellten Beispiel eines Bodenverdichters ist auch am Hinterwagen 12 eine Bodenbearbeitungswalze 32 vorgesehen. Auch diese ist mit einem am Außenumfang im Wesentlichen glatt ausgebildeten Metallmantel 34 ausgebildet, so dass der Bodenverdichter der Fig. 2 gleichermaßen zum Verdichten des Aufbaumaterials des Bodens 26 eingesetzt werden kann. Bei Ausgestaltung einer oder beider Bodenbearbeitungswalzen 20, 32 der in den Fig. 1 und 2 dargestellten Bodenverdichter mit einem am Außenumfang strukturierten Metallmantel 22 bzw. 34 kann eine derartige Bodenbearbeitungsmaschine 10 bzw. ein derartiger Bodenverdichter auch zum Zerkleinern des Aufbaumaterials des Bodens 26 eingesetzt werden.

Für die Zwecke der nachfolgenden Erläuterung eines elektrohydraulischen Antriebssystems bilden bei dem in Fig. 2 dargestellten Bodenverdichter die beiden Bodenbearbeitungswalzen 20, 32 die erste Antriebsrolle 28 bzw. die zweite Antriebsrolle 30.

Es ist darauf hinzuweisen, dass die nachfolgend beschriebenen Prinzipien für den Aufbau und die Funktion eines elektrohydraulischen Antriebssystems auch bei anders aufgebauten Bodenbearbeitungsmaschinen Anwendung finden können. Beispielsweise könnte eine als Bodenverdichter aufgebaute Bodenbearbeitungsmaschine auch so ausgebildet sein, dass die in Fig. 1 dargestellten Antriebsräder 18 als Gummiradwalzen ausgeführt sind, welche gleichermaßen dazu dienen können, den Boden 26 zu verdichten. In einem derartigen Falle ist es vorteilhaft, nicht nur zwei nebeneinander liegende und als Gummiradwalzen ausgeführte Antriebsräder 18 vorzusehen, sondern beispielsweise vier oder fünf derartige als Gummiradwalzen ausgeführte Antriebsräder 18 um eine gemeinsame Achse drehbar und zur Drehung angetrieben vorzusehen, wobei jeweils zwei Antriebsräder 18 bzw. als Gummiradwalzen ausgeführte Antriebsräder 18 gemeinsam zur Drehung antreibbar sein können. Derartige als Gummiradwalzen ausgeführte Antriebsräder können sowohl am Hinterwagen, als auch am Vorderwagen vorgesehen sein.

Weiter ist darauf hinzuweisen, dass eine derartige Bodenbearbeitungsmaschine beispielsweise auch als Radlader ausgeführt sein kann, bei welchem am Vorderwagen und am Hinterwagen beispielsweise jeweils zwei gemeinsam zur Drehung antreibbare Antriebsräder vorgesehen sind.

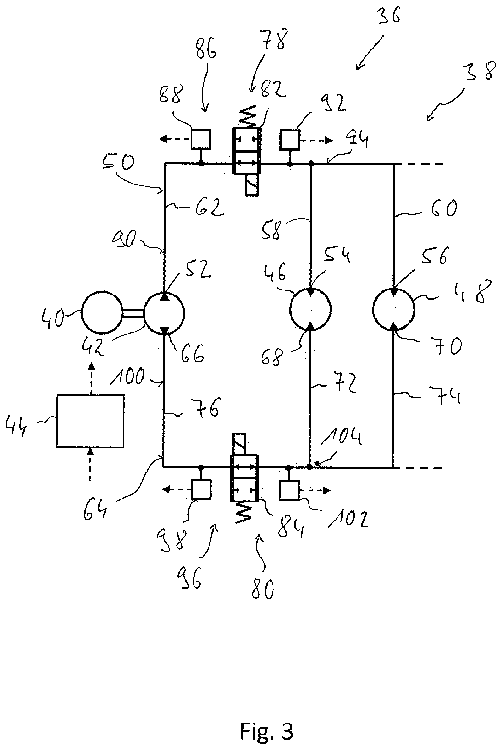

Mit Bezug auf die Fig. 3 wird nachfolgend ein erstes Ausgestaltungsbeispiel eines elektrohydraulischen Antriebssystems 36 erläutert, welches beispielsweise bei den in den Fig. 1 und 2 dargestellten und als Bodenverdichter ausgebildeten Bodenbearbeitungsmaschinen 10 zum Bewegen der jeweiligen Bodenbearbeitungsmaschine 10 über den zu verdichtenden Boden 26 eingesetzt werden kann.

Das elektrohydraulische Antriebssystem 36 umfasst einen Fahr-Hydraulikkreislauf 38, in welchem ein Fluid, beispielsweise Hydrauliköl, zirkuliert bzw. zur Zirkulation gefördert werden kann. Hierzu weist das elektrohydraulische Antriebssystem 36 eine durch einen Elektromotor 40 angetriebene Fahr-Hydraulikpumpe 42 auf, welche vorzugsweise ein konstantes Fördervolumen aufweist. Dies bedeutet, dass, bezogen auf eine definierte Drehzahl des Elektromotors 40, das Fördervolumen der Fahrer-Hydraulikpumpe 42 konstant ist, grundsätzlich aber mit der Drehzahl variieren kann. Der Elektromotor 40 wird aus einer nicht dargestellten elektrischen Energiequelle, beispielsweise Batterie, Brennstoffzelle, Generator oder dergleichen, gespeist und steht unter der Ansteuerung einer Ansteuereinheit 44. Durch die Ansteuereinheit 44 wird die an den Elektromotor 40 angelegte Spannung derart eingestellt, dass der Elektromotor 40 die Fahr-Hydraulikpumpe 42 mit einer für einen vorzusehenden Fahrbetrieb der Bodenbearbeitungsmaschine 10 erforderlichen bzw. geeigneten Drehzahl antreibt, um im Fahr-Hydraulikkreislauf 38 den erforderlichen Fluiddruck aufzubauen.

Der Fahr-Hydraulikkreislauf 38 umfasst ferner zwei Fahr-Hydraulikmotoren 46, 48. Dabei kann der erste Fahr-Hydraulikmotor 46 beispielsweise der jeweiligen ersten Antriebsrolle 28 zugeordnet sein, um diese zur Drehung anzutreiben, während der zweite Fahr-Hydraulikmotor 48 der jeweiligen zweiten Antriebsrolle 30 zum Antrieb derselben zugeordnet sein kann. Im Falle der Bodenbearbeitungsmaschine 10 der Fig. 1 kann der zweite Fahr-Hydraulikmotor 48 beispielsweise beide Antriebsräder 18 gemeinsam zur Drehung antreiben. Jeder der beiden Fahr-Hydraulikmotoren 46, 48 ist vorzugsweise mit konstantem Schluckvolumen ausgebildet.

Der Fahr-Hydraulikkreislauf 48 umfasst einen ersten Leitungsbereich 50. Dieser stellt eine Verbindung her zwischen einem ersten Verbindungsanschluss 52 der Fahr-Hydraulikpumpe 42 und jeweiligen ersten Verbindungsanschlüssen 54, 56 der Fahr-Hydraulikmotoren 46, 48. Der erste Leitungsbereich 50 umfasst in Zuordnung zu jedem Fahr-Hydraulikmotor 46, 48 eine erste Motor-Zweigleitung 58, 60, wobei die dem ersten Fahr-Hydraulikmotor 46 zugeordnete erste Motor-Zweigleitung 58 im Bereich des ersten Verbindungsanschlusses 54 des ersten Fahr-Hydraulikmotors 46 an den ersten Fahr-Hydraulikmotor 46 anschließt und die dem zweiten Fahr-Hydraulikmotor 48 zugeordnete erste Motor-Zweigleitung 60 im Bereich des ersten Verbindungsanschlusses 56 des zweiten Fahr-Hydraulikmotors 48 an den zweiten Fahr-Hydraulikmotor 48 anschließt.

Der erste Leitungsbereich 50 umfasst ferner eine erste Hauptleitung 62, welche im Bereich des ersten Verbindungsanschlusses 52 an die Fahr-Hydraulikpumpe 42 anschließt und eine Verbindung zwischen dem ersten Verbindungsanschluss 52 und den beiden ersten Motor-Zweigleitungen 58, 60 herstellt.

Der Fahr-Hydraulikkreislauf 38 umfasst ferner einen zweiten Leitungsbereich 64, welcher eine Verbindung zwischen einem zweiten Verbindungsanschluss 66 der Fahr-Hydraulikpumpe 42 und jeweiligen zweiten Verbindungsanschlüssen 68, 70 des ersten Fahr-Hydraulikmotors 46 und des zweiten Fahr-Hydraulikmotors 48 herstellt.

In Zuordnung zu jedem der beiden Fahr-Hydraulikmotoren 46, 48 umfasst der zweite Leitungsbereich 64 jeweils eine zweite Motor-Zweigleitung 72, 74. Die dem ersten Fahr-Hydraulikmotor 46 zugeordnete zweite Motor-Zweigleitung 72 schließt im Bereich des zweiten Verbindungsanschlusses 68 des ersten Fahr-Hydraulikmotors 46 an den ersten Fahr-Hydraulikmotor 46 an, und die dem zweiten Fahr-Hydraulikmotor 48 zugeordnete zweite Motor-Zweigleitung 74 schließt im Bereich des zweiten Verbindungsanschlusses 70 des zweiten Fahr-Hydraulikmotors 48 an den zweiten Fahr-Hydraulikmotor 48 an. Der zweite Leitungsbereich 64 umfasst ferner eine zweite Hauptleitung 76. Die zweite Hauptleitung 76 schließt im Bereich des zweiten Verbindungsanschlusses 66 an die Fahr-Hydraulikpumpe 42 an und verbindet die beiden zweiten Motor-Zweigleitungen 72, 74 mit dem zweiten Verbindungsanschluss 66 der Fahr-Hydraulikpumpe 42.

Es ist darauf hinzuweisen, dass die verschiedenen ersten und zweiten Verbindungsanschlüsse 52, 54, 56 bzw. 66, 68, 70 als diejenigen Bereiche betrachtet werden können, in welchen die verschiedenen Leitungsbereiche 50, 64 Fluid von der Fahr-Hydraulikpumpe 42 bzw. den Fahr-Hydraulikmotoren 46, 68 aufnehmen bzw. in diese einspeisen. Derartige Verbindungsanschlüsse können in verschiedenster Weise baulich ausgeführt sein.

In Zuordnung zu jedem der beiden Leitungsbereiche 50, 64 ist jeweils eine Ventilanordnung 78, 80 vorgesehen. Die dem ersten Leitungsbereich 50 zugeordnete bzw. in diesem angeordnete Ventilanordnung 78 umfasst eine beispielsweise als Proportionalventil ausgebildete und unter der Ansteuerung der Ansteuereinheit 44 stehende erste Ventileinheit 82. Gleichermaßen umfasst die dem zweiten Leitungsbereich 64 zugeordnete bzw. darin angeordnete Ventilanordnung 80 eine beispielsweise als Proportionalventil ausgebildete und unter der Ansteuerung der Ansteuereinheit 44 stehende zweite Ventileinheit 84. Die erste Ventileinheit 82 der Ventilanordnung 78 ist in der ersten Hauptleitung 62 des ersten Leitungsbereichs 50 angeordnet. Die zweite Ventileinheit 84 der Ventilanordnung 80 ist in der zweiten Hauptleitung 76 des zweiten Leitungsbereichs 64 angeordnet. Die erste Ventileinheit 82 und die zweite Ventileinheit 84 sind als Normal-Geschlossen-Ventile ausgebildet.

Durch entsprechende Ansteuerung der Ventileinheiten 82, 84 können diese bei Ausgestaltung als Proportionalventile beispielsweise zwischen zwei in Fig. 3 veranschaulichten Ventilstellungen umgeschaltet werden. In der in Fig. 3 dargestellten Offenstellung geben die Ventileinheiten 82, 84 die jeweiligen Leitungsbereiche 50, 64 zur Durchströmung frei bzw. stellen einen minimalen Strömungswiderstand bereit. In der anderen Ventilstellung, also einer Sperrstellung, sperren die Ventileinheiten 82, 84 den jeweils zugeordneten Leitungsbereich 50, 64 gegen die Durchströmung mit Fluid, beispielsweise Hydrauliköl. Durch getaktete Ansteuerung der Ventileinheiten 82, 84 und periodisches Umschalten zwischen der Offenstellung der Sperrstellung können diese in einen Drosselzustand geschaltet werden bzw. in einem Drosselbetrieb betrieben werden, in welchem im jeweiligen Leitungsbereich 50, 64 der Fluidstrom gedrosselt wird, also ein erhöhter Strömungswiderstand für das durch die Fahr-Hydraulikpumpe 42 in den jeweiligen Leitungsbereich 50 bzw. 54 geförderte Fluid bereitgestellt ist.

In Zuordnung zu jedem Leitungsbereich 50, 64 bzw. zu jeder Ventilanordnung 78 bzw. 80 ist eine Drucksensoranordnung 86, 96 vorgesehen. Die dem ersten Leitungsbereich 50 bzw. der Ventilanordnung 78 zugeordnete erste Drucksensoranordnung 86 umfasst einen Drucksensor 88, welcher dazu ausgebildet bzw. angeordnet ist, den Fluiddruck in einem Leitungsabschnitt 90 des ersten Leitungsbereichs 50 zwischen der Fahr-Hydraulikpumpe 42 und der Ventilanordnung 78 bzw. der ersten Ventileinheit 82 zu erfassen. Die erste Drucksensoranordnung 86 umfasst ferner einen Drucksensor 92, welcher dazu ausgebildet bzw. angeordnet ist, den Fluiddruck in einem Leitungsabschnitt 94 des ersten Leitungsbereichs 50 zwischen der Ventilanordnung 78 bzw. der ersten Ventileinheit 82 derselben und den beiden Fahr-Hydraulikmotoren 46, 48 zu erfassen. Die Drucksensoren 88, 92 geben ein den jeweils erfassten Druck repräsentierendes Signal zur Ansteuereinheit 44 aus.

Dem zweiten Leitungsbereich 64 bzw. der Ventilanordnung 80 ist eine zweite Drucksensoranordnung 96 zugeordnet. Diese umfasst einen Drucksensor 98 in einem Leitungsabschnitt 100 des zweiten Leitungsbereichs 64 zwischen der Fahr-Hydraulikpumpe 42 und der Ventilanordnung 80 bzw. der zweiten Ventileinheit 84 derselben. Die zweite Drucksensoranordnung 96 umfasst ferner einen Drucksensor 102, welcher dazu ausgebildet bzw. angeordnet ist, einen Fluiddruck in einem Leitungsabschnitt 104 des zweiten Leitungsbereichs 64 zwischen der Ventilanordnung 80 bzw. der zweiten Ventileinheit 84 und den beiden Fahr-Hydraulikmotoren 46, 48 zu erfassen. Auch die beiden Drucksensoren 98, 102 geben das den jeweils erfassten Fluiddruck repräsentierende Signal zur Ansteuereinheit 44 aus.

Die den beiden Leitungsbereichen 50, 64 zugeordneten Drucksensoren 88, 92 bzw. 98, 102 können beispielsweise jeweils in die verschiedenen Leitungsabschnitte 90, 94 bzw. 100, 104 in Abstand zu den Ventilanordnungen 78, 80 integriert sein. Alternativ kann einer oder können mehrere dieser Drucksensoren 88, 92, 98, 102 in die jeweilige Ventilanordnung 78, 80 beispielsweise an einem jeweiligen Anschlussbereich vorgesehen sein, in welchem die jeweilige Ventileinheit 82, 84 an den ersten Leitungsbereich 50 bzw. den zweiten Leitungsbereich 64 angeschlossen ist.

Im normalen Fahrbetrieb steuert die Ansteuereinheit 44 den Elektromotor 40 derart an, dass die Fahr-Hydraulikpumpe 42 Fluid unter Druck in den ersten Leitungsbereich 50 oder den zweiten Leitungsbereich 64 und somit zu den beiden Fahr-Hydraulikmotoren 46, 48 speist. Beispielsweise sei angenommen, dass zum Bewegen des Bodenverdichters 10 in einer Vorwärtsrichtung, also in den Fig. 1 und 2 jeweils nach links, die Fahr-Hydraulikpumpe 42 derart angetrieben wird, dass Druckfluid in den ersten Leitungsbereich 50 eingespeist wird und über diesen zu den ersten Verbindungsanschlüssen 54, 56 der Fahr-Hydraulikmotoren 46, 48 strömt. Nach Durchströmen der beiden Fahr-Hydraulikmotoren 46, 48 strömt das Fluid über den zweiten Leitungsbereich 64 zum zweiten Verbindungsanschluss 66 der Fahr-Hydraulikpumpe 42 zurück. Die Drehzahl der beiden Fahr-Hydraulikmotoren 54, 56, welche vorzugsweise mit konstantem Schluckvolumen aufgebaut sind, kann allein durch die Drehzahl der vorzugsweise mit konstantem Fördervolumen aufgebauten Fahr-Hydraulikpumpe 42 bestimmt werden, deren Drehzahl wiederum durch entsprechende Ansteuerung des Elektromotors 40 eingestellt werden kann. Soll der Bodenverdichter 10 in der entgegengesetzten Richtung, also in Rückwärtsfahrrichtung bewegt werden, wird die Fahr-Hydraulikpumpe 42 zur Drehung in entgegengesetzter Richtung angetrieben, so dass diese über ihren zweiten Verbindungsanschluss 66 Druckfluid in den zweiten Leitungsbereich 64 und über diesen zu den beiden Fahr-Hydraulikmotoren 46, 48 fördert. Diese und somit auch die durch diese zur Drehung angetriebenen Antriebsrollen 28, 30 rotieren dann in einer der Drehrichtung für den Vorwärtsfahrbetrieb entgegengesetzten Drehrichtung. Das aus den Fahr-Hydraulikmotoren 46, 48 abgegebene Fluid strömt über den ersten Leitungsbereich 50 zu dem ersten Verbindungsanschluss 52 der Fahr-Hydraulikpumpe 42 zurück.

In einem Antriebszustand, also beispielsweise beim Bewegen des Bodenverdichters 10 in der Vorwärtsfahrrichtung, treibt der aus der elektrischen Energiequelle gespeiste Elektromotor 40 die Fahr-Hydraulikpumpe 42 zum Fördern des Fluids in der für einen jeweiligen Fahrzustand vorgesehenen Richtung im Fahr-Hydraulikkreislauf 38 an. Soll, ausgehend von einem derartigen Antriebszustand, die Bodenbearbeitungsmaschine 10 abgebremst, also verzögert werden, wird die Erregung des Elektromotors 40 beendet, so dass dieser die Fahr-Hydraulikpumpe 42 nicht mehr antreibt. Durch die Trägheit der Bodenbearbeitungsmaschine 10 wirken in einem derartigen Bremszustand die beiden Fahr-Hydraulikmotoren 46, 48 als Pumpen und fördern das Fluid grundsätzlich in der gleichen Zirkulationsrichtung weiter, in welcher dieses zuvor im Antriebszustand durch die Fahr-Hydraulikpumpe 42 zur Zirkulation gefördert wurde. Aufgrund der durch die Fahr-Hydraulikmotoren 46, 48 generierten Fluidzirkulation wirkt in einem derartigen Bremszustand die Fahr-Hydraulikpumpe 42 als Hydraulikmotor und treibt den Elektromotor 40 bzw. dessen Rotor zur Drehung an. Der Elektromotor 40 kann in diesem Bremszustand somit als Generator wirken, welcher Energie in eine diesem zugeordnete elektrische Energiequelle zurückspeisen kann.

Da das durch den Elektromotor 40 im Generatorbetriebszustand desselben bereitgestellte Bremsmoment, abhängig vom Betriebszustand des Elektromotors 40, nicht immer ausreichen kann, um ein erforderliches Bremsmoment zu erzeugen, können bei dem in Fig. 3 dargestellten elektrohydraulischen Antriebssystem 36 die Ventilanordnungen 78, 80 vermittels der Ansteuereinheit 44 derart angesteuert werden, dass diese ein Bremsmoment generieren. Ist in dem dem Bremszustand vorangehenden Antriebszustand Fluid von der Fahr-Hydraulikpumpe 52 über den ersten Leitungsbereich 50 zu den Fahr-Hydraulikmotoren 46, 48 geleitet worden, so fördern diese im dann folgenden Bremszustand das Fluid über den zweiten Leitungsbereich 64 zur dann als Motor wirkenden Fahr-Hydraulikpumpe 42. Zum Erzeugen eines Bremsmoments kann die im zweiten Leitungsbereich 64 angeordnete Ventilanordnung 80 bzw. deren zweite Ventileinheit 84 durch die Ansteuereinheit 44 unter Berücksichtigung der von den Drucksensoren 98, 102 gelieferten Druckinformation derart angesteuert werden, dass diese einen Drosseleffekt generiert, also beispielsweise in dem vorangehend erläuterten Drosselbetriebszustand betrieben wird. Aufgrund des so eingeführten erhöhten Strömungswiderstands werden auch die Fahr-Hydraulikmotoren 46, 48 abgebremst, so dass zusätzlich zu dem durch den Elektromotor 44 bereitgestellten Bremsmoment ein durch hydraulische Wechselwirkung generiertes Bremsmoment an den Fahr-Hydraulikmotoren 46, 48 entsteht. Durch Einstellung der Drosselwirkung der Ventilanordnung 80 vermittels der Ansteuereinheit 44 kann die Größe dieses Bremsmoments und somit die Verzögerung der Bodenbearbeitungsmaschine 10 eingestellt werden. Beispielsweise kann diese Verzögerung in Übereinstimmung mit dem Ausmaß einer Betätigung eines Bremspedals oder eines sonstigen Bremsorgans im Bedienstand 24 eingestellt werden. Entsprechend kann, wenn im vorangehenden Antriebszustand die Fahr-Hydraulikpumpe 42 Fluid über den zweiten Leitungsbereich 64 zu den Fahr-Hydraulikmotoren 46, 48 geleitet hat, in einem nachfolgenden Bremszustand die erste Ventileinheit 82 der Ventilanordnung 78 des ersten Leitungsbereichs 50 zum Generieren einer Drosselwirkung angesteuert werden, um die Fahr-Hydraulikmotoren 46, 48 abzubremsen.

Die durch die verschiedenen Drucksensoren 88, 82 bzw. 98, 102 bereitgestellte Information über den in den jeweiligen Leitungsabschnitten 90, 94, 100, 104 vorherrschenden Fluiddruck kann genutzt werden, um dann, wenn die Bodenbearbeitungsmaschine 10 aus einem Stillstandzustand heraus in Bewegung versetzt werden soll, ein Wegrollen der Bodenbearbeitungsmaschine 10 zu verhindern, wenn diese auf einem geneigten Boden 26 steht.

Im Stillstandzustand können die beiden Ventilanordnungen 78, 80 derart angesteuert werden bzw. eingestellt sein, dass sie im ersten Leitungsbereich 50 bzw. im zweiten Leitungsbereich 64 die Fluidströmung unterbrechen. Wenn durch die Leitungsbereiche 54, 64 kein Fluid strömen kann, können die Fahr-Hydraulikmotoren 46, 48 nicht rotieren, so dass durch die in der Sperrstellung gehaltenen Ventileinheiten 82, 84 der Ventilanordnungen 78, 80 die Funktion einer Feststellbremse bereitgestellt werden kann.

Steht die Bodenbearbeitungsmaschine 10 auf einem geneigten Boden, führt dies dazu, dass die Fahr-Hydraulikmotoren 46, 48 mit einem Drehmoment beaufschlagt werden. Da diese bei in der Sperrstellung gehaltenen Ventilanordnungen 78, 80 nicht rotieren können, entsteht abhängig von der Richtung, in welcher die Fahr-Hydraulikmotoren 46, 48 mit einem Drehmoment beaufschlagt werden, in einem der Leitungsabschnitte 94, 104 zwischen den Fahr-Hydraulikmotoren 46, 48 und den Ventilanordnungen 78, 80 ein erhöhter Fluiddruck. Wenn beispielsweise die Bodenbearbeitungsmaschine 10 auf einem in den Fig. 1 und 2 von links nach rechts abschüssigen Boden 26 steht, wird die Bodenbearbeitungsmaschine 10 durch die entstehende Hangabtriebskraft zur Bewegung in der Rückwärtsfahrrichtung beaufschlagt. Bei Bewegung in der Rückwärtsfahrrichtung strömt grundsätzlich Fluid aus dem zweiten Leitungsbereich 64 über die Fahr-Hydraulikmotoren 46, 48 in den ersten Leitungsbereich 50. Dies wiederum bedeutet, dass bei Beaufschlagung in der Rückwärtsfahrrichtung die Fahr-Hydraulikmotoren 46, 48 die Neigung haben, Fluid in die diesen zugeordneten ersten Motor-Zweigleitungen 58, 60 und somit in den Leitungsabschnitt 94 zu fördern, so dass darin ein erhöhter Fluiddruck entsteht, welcher durch den Drucksensor 92 erfasst wird. Steht die Bodenbearbeitungsmaschine 10 auf einem in den Fig. 1 und 2 von rechts nach links abfallenden Boden 26, würde durch die entsprechende Beaufschlagung der Fahr-Hydraulikmotoren 46, 48 der Fluiddruck in den diesen zugeordneten zweiten Motor-Zweigleitungen 72, 74 und somit im Leitungsabschnitt 104 ansteigen und ein entsprechend erhöhter Fluiddruck durch den Drucksensor 102 erfasst werden.

Die Ansteuereinheit 44 vergleicht im Stillstandzustand die von den beiden Drucksensoren 92, 102 ausgegebenen und die Fluiddrücke in den Leitungsabschnitten 94, 104 repräsentierenden Signale und erkennt, in welchem der Leitungsabschnitte 94, 104 ein höherer Fluiddruck vorherrscht.

Soll, ausgehend von einem derartigen Stillstandzustand, die Bodenbearbeitungsmaschine in Bewegung versetzt werden und wieder in einen Antriebszustand gelangen, in welchem die Bodenbearbeitungsmaschine 10 entgegengesetzt zu der auf diese einwirkenden Hangabtriebskraft bewegt werden soll, steuert die Ansteuereinheit 44 den Elektromotor 40 derart an, dass in demjenigen Leitungsbereich 50, 64, in welchem der zugeordnete Drucksensor 92, 102 einen erhöhten Fluiddruck indiziert, der Fluiddruck im jeweiligen Leitungsabschnitt 90 bzw. 100 erhöht wird. Indiziert beispielsweise der Drucksensor 92 einen erhöhten Fluiddruck im Leitungsabschnitt 94 des ersten Leitungsbereichs 50, wird zunächst der Elektromotor 40 derart angesteuert, dass die Fahr-Hydraulikpumpe 42 Fluid in den Leitungsabschnitt 90 einspeist und somit der Fluiddruck im Leitungsabschnitt 90 ansteigt, wobei der ansteigende Fluiddruck im Leitungsabschnitt 90 in dem Ausgangssignal des Drucksensors 88 erkennbar wird.

Der Elektromotor 40 wird derart angesteuert, dass der Fluiddruck im Leitungsabschnitt 90 im Bereich des durch den Drucksensor 92 erfassten Fluiddrucks im Leitungsabschnitt 94 liegt. Sind diese beiden Fluiddrücke etwa gleich groß, können die beiden zunächst in ihrer Sperrstellung gehaltenen Ventileinheiten 82, 84 in ihre jeweilige Offenstellung geschaltet werden. Da im Leitungsabschnitt 90 des ersten Leitungsbereichs 50 ein ausreichend hoher Druck vorhanden ist, wird verhindert, dass beim Übergang der Ventileinheit 82 in deren Offenstellung Fluid aus dem Leitungsabschnitt 94 in den Leitungsabschnitt 90 strömt, was ein Zurückrollen der Bodenbearbeitungsmaschine 10 zur Folge hätte. Durch den ausgeglichenen Fluiddruck in den beiden Leitungsabschnitten 90, 94 wird beim Öffnen der beiden Ventileinheiten 82, 84 die Bodenbearbeitungsmaschine 10 durch den aufgebauten Fluiddruck zunächst stillstehend gehalten. Durch Erhöhen der Drehzahl des Elektromotors 40 und damit der Fahr-Hydraulikpumpe 42 kann dann der Fluiddruck im ersten Leitungsbereich 50 erhöht werden und somit die Bodenbearbeitungsmaschine 10 in der gewünschten Bewegungsrichtung in Bewegung versetzt werden. Da die beiden Ventilanordnungen 78, 80 dann geöffnet werden, wenn in diesem Fall im ersten Leitungsbereich 50 beidseits der Ventilanordnung 78 die Drücke ausgeglichen sind, entsteht beim Öffnen der Ventilanordnungen 78, 80 auch kein auf die Fahr-Hydraulikmotoren 46, 48 einwirkender Druckstoß, welcher ein stoßartiges oder ruckartiges Anfahren der Bodenbearbeitungsmaschine 10 und ggf. ein Durchdrehen der Antriebsrollen 28, 30 zur Folge hätte.

Entsprechend kann vorgegangen werden, wenn in der Ansteuereinheit 44 erkannt wird, dass der durch den Drucksensor 102 erfasste Fluiddruck im Leitungsabschnitt 104 höher ist, als der durch den Drucksensor 92 erfasste Fluiddruck im Leitungsabschnitt 94. In diesem Falle wird dann, wenn die Bodenbearbeitungsmaschine 10 wieder in Bewegung versetzt werden soll, der Elektromotor 40 derart angesteuert, dass die Fahr-Hydraulikpumpe 42 Fluid in den Leitungsabschnitt 100 des zweiten Leitungsbereichs 64 einspeist, bis der von dem Drucksensor 98 erfasste Fluiddruck im Wesentlichen dem vom Drucksensor 102 erfassten Fluiddruck entspricht. Ist dies erreicht, können die beiden Ventilanordnungen 78, 80 bzw. deren Ventileinheiten 82, 84 in die Offenstellung geschaltet werden, um dann bei weiter erhöhter Drehzahl des Elektromotors 40 die Bodenbearbeitungsmaschine 10 in Bewegung zu versetzen.

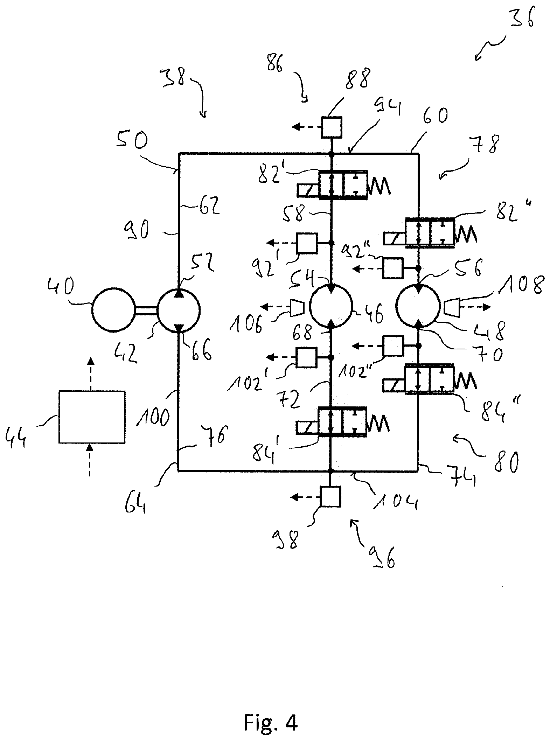

Die Fig. 4 zeigt eine alternative Ausgestaltungsform eines elektrohydraulischen Antriebssystems 36 für einen Bodenverdichter 10. Bei dem in Fig. 4 dargestellten elektrohydraulischen Antriebssystem 36 umfasst die dem ersten Leitungsbereich 50 zugeordnete Ventilanordnung 78 zwei erste Ventileinheiten 82', 82". Die erste Ventileinheit 82' ist in der dem ersten Fahr-Hydraulikmotor 46 zugeordneten ersten Motor-Zweigleitung 58 angeordnet, und die erste Ventileinheit 82" ist in der dem zweiten Fahr-Hydraulikmotor 48 zugeordneten ersten Motor-Zweigleitung 60 angeordnet. Ferner umfasst die erste Drucksensoranordnung 86 neben dem Drucksensor 88, welcher den Fluiddruck im Leitungsabschnitt 90 zwischen der Fahr-Hydraulikpumpe 42 und der Ventilanordnung 78 erfasst, in jeder ersten Motor-Zweigleitung 58, 60 einen Drucksensor 92', 92". Der Drucksensor 92' erfasst den Fluiddruck in der ersten Motor-Zweigleitung 58 zwischen der ersten Ventileinheit 82' und dem ersten Fahr-Hydraulikmotor 46. Der Drucksensor 92" erfasst den Fluiddruck in der dem zweiten Fahr-Hydraulikmotor 48 zugeordneten ersten Motor-Zweitleitung 60 in einem Bereich zwischen der Ventileinheit 82" und dem zweiten Fahr-Hydraulikmotor 48.

Gleichermaßen umfasst die im zweiten Leitungsbereich 64 vorgesehene Ventilanordnung 80 eine zweite Ventileinheit 84' in der dem ersten Fahr-Hydraulikmotor 46 zugeordneten zweiten Motor-Zweigleitung 72 und eine zweite Ventileinheit 84" in der dem zweiten Fahr-Hydraulikmotor 48 zugeordneten zweiten Motor-Zweigleitung 74. Die zweite Drucksensoranordnung 96 umfasst in Zuordnung zum ersten Fahr-Hydraulikmotor 46 einen Drucksensor 102', welcher einen Fluiddruck in der dem ersten Fahr-Hydraulikmotor 46 zugeordneten zweiten Motor-Zweigleitung 72 in einem Bereich zwischen dem ersten Fahr-Hydraulikmotor 46 und der diesem zugeordneten zweiten Ventileinheit 84' erfasst. Die zweite Drucksensoranordnung 96 umfasst ferner einen Drucksensor 102", welcher in der dem zweiten Fahr-Hydraulikmotor 48 zugeordneten zweiten Motor-Zweigleitung 74 in einem Bereich zwischen dem zweiten Fahr-Hydraulikmotor 48 und der diesem zugeordneten zweiten Ventileinheit 84" angeordnet ist. Ferner umfasst die zweite Drucksensoranordnung 96 den Drucksensor 98, welcher den Fluiddruck im Leitungsabschnitt 100 zwischen der Fahr-Hydraulikpumpe 42 und der Ventilanordnung 80, also den beiden zweiten Ventileinheiten 84', 84" derselben, erfasst.

Auch bei dieser Ausgestaltung sind die ersten Ventileinheiten 82', 82" und die zweiten Ventileinheiten 84', 84" als Normal-Geschlossen-Ventile ausgebildet, so dass beispielsweise bei Auftreten eines Stromausfalls oder eines anderen Defekts beispielsweise der Ansteuereinheit 44 und daher fehlendem Ansteuersignal für die Ventileinheiten 82', 82", 84', 84" diese in ihren Sperrzustand gehen und die Fluidströmungsverbindung von bzw. zu den Fahr-Hydraulikmotoren 46, 48 unterbrechen, wodurch die Bodenbearbeitungsmaschine 10 zum Stillstand gebracht wird.

Bei dem in Fig. 4 dargestellten elektrohydraulischen Antriebssystem 36 können alle der vorangehend mit Bezug auf das elektrohydraulische Antriebssystem 36 erläuterten Funktionen erfüllt werden. Zum Erzeugen eines Bremsmomentes bzw. eines zusätzlichen Bremsmomentes können die Ventileinheiten 82', 82", 84', 84" in einen Drosselzustand gestellt werden, um einen Fluidstrom von den im Bremszustand als Pumpen wirksamen Fahr-Hydraulikmotoren 46, 48 zur Fahr-Hydraulikpumpe 42 drosseln können. Da in Zuordnung zu den beiden Fahr-Hydraulikmotoren 46, 48 die jeweils zu erzeugende Drosselwirkung unabhängig vom anderen Fahr-Hydraulikmotor eingestellt werden kann, ist es möglich, die an den beiden Fahr-Hydraulikmotoren 46, 48 zu erzeugenden Bremsmomente unabhängig voneinander und mit unterschiedlicher Größe bereitzustellen. Dies kann beispielsweise vorteilhaft sein, wenn, wie beispielsweise bei der in Fig. 1 dargestellten Bodenbearbeitungsmaschine 10, zwischen den verschieden gestalteten Antriebsrollen 28, 30 und dem Boden 26 unterschiedlich große Traktionswirkungen bestehen. Es kann somit verhindert werden, dass beispielsweise an einer der Antriebsrollen 28, 30 ein diese in einen Schlupfzustand versetzendes Bremsmoment erzeugt wird, während an der jeweils anderen Antriebsrolle aufgrund stärkerer Traktion noch kein Schlupf auftritt. Selbstverständlich kann auch bei dem in Fig. 4 dargestellten elektrohydraulischen Antriebssystem 36 diese Bremswirkung in beiden Bewegungsrichtungen der Bodenbearbeitungsmaschine 10 bereitgestellt werden.

Auch das Verhindern des Wegrollens beim Übergang aus einem Stillstandzustand in einen Antriebszustand kann in der vorangehend beschriebenen Art und Weise realisiert werden. Auch hier ist es möglich, durch gezielte Ansteuerung der beiden Ventilanordnungen 78, 80 bzw. der ersten bzw. zweiten Ventileinheiten 82', 82" und 84', 84" die beiden Fahr-Hydraulikmotoren 46, 48 unabhängig voneinander zur Erzeugung des Haltemoments anzusteuern. Beispielsweise könnte nur der erste Fahr-Hydraulikmotor 46 dazu genutzt werden, nach entsprechendem Druckaufbau im Leitungsabschnitt 90 oder im Leitungsabschnitt 100 und Stellen der Ventileinheit 82' oder der Ventileinheit 84' in den Offenzustand, zunächst ein Wegrollen der Bodenbearbeitungsmaschine 10 auf dem geneigten Boden zu verhindern, um nach weiterer Erhöhung des Fluiddrucks oder einhergehend mit einer weiteren Erhöhung des Fluiddrucks auch die dem zweiten Fahr-Antriebsmotor 48 zugeordneten Ventileinheiten 82", 84" in den Offenzustand zu stellen, und damit beide Fahr-Antriebsmotoren und die mit diesen zusammenwirkenden Antriebsrollen 28 bzw. 30 dazu zu nutzen, die Bodenbearbeitungsmaschine 10 in Bewegung zu versetzen.

Die voneinander unabhängige Versorgung der Fahr-Hydraulikmotoren 46, 48 mit Fluid ermöglicht es weiterhin, beispielsweise unter Berücksichtigung einer von diesen bzw. den durch diesen angetriebenen Antriebsrollen 28, 30 zugeordneten Drehzahlsensoren 106, 108 bereitgestellten Drehzahlinformation eine Antischlupfregelung der durch die Fahr-Hydraulikmotoren 46, 48 angetriebenen Antriebsrollen 28, 30 vorzunehmen.

Wird in der Ansteuereinheit 44 erkannt, dass die in den Ausgangssignalen der Drehzahlsensoren 106, 108 repräsentierten Drehzahlen der Fahr-Hydraulikmotoren 46, 48 bzw. der durch diese angetriebenen Antriebsrollen 28, 30 beispielsweise in einem über einer zulässigen Schwelle liegenden Ausmaß voneinander abweichen, was bedeutet, dass das Auftreten eines Schlupfzustands erkannt wird und dementsprechend eine Schlupfzustandsinformation vorliegt, kann unter Berücksichtigung dieser das Abweichen der Drehzahlen der Antriebsrollen 28, 30 voneinander bzw. von einer jeweiligen Soll-Drehzahl indizierenden Schlupfzustandsinformation durch Ansteuerung zumindest einer der dem schneller drehenden Fahr-Hydraulikmotor 46 bzw. 48 zugeordneten Ventileinheiten 82', 84' bzw. 82", 84" der Fluidstrom durch diesen Fahr-Hydraulikmotor hindurch gedrosselt werden, so dass dessen Drehzahl abnimmt. Durch den so eingeführten Drosseleffekt wird der Fluiddruck am jeweils anderen Fahr-Hydraulikmotor geringfügig angehoben, so dass dessen Drehzahl zunimmt und somit die beiden Drehzahlen sich einander annähern, beispielsweise bis diese einander wieder im Wesentlichen entsprechen oder die vorhandene Drehzahlabweichung unter der dafür zulässigen Schwelle liegt. Ist dieser Zustand erreicht, kann die zuvor gedrosselte Fluidzufuhr wieder freigegeben, also die drosselnde Ventileinheit wieder in die Offenstellung bzw. den zuvor eingenommenen Zustand gestellt werden.

Dabei ist zu berücksichtigen, dass beispielsweise bei dem in Fig. 2 dargestellten Aufbau einer als Bodenverdichter ausgebildeten Bodenbearbeitungsmaschine 10 die beiden als Bodenbearbeitungswalzen 20, 32 ausgeführten Antriebsrollen 28, 30 den gleichen Außendurchmesser aufweisen. Als Referenzdrehzahl bzw. Soll-Drehzahl für die in einem Schlupfzustand schneller drehende Antriebsrolle kann daher die Drehzahl der langsamer drehenden Antriebsrolle genutzt werden. Übersteigt in diesem Falle die Drehzahl der schneller drehenden Antriebsrolle die Drehzahl der langsamer drehenden Antriebsrolle um ein zulässiges Ausmaß, kann die Schlupfregelung einsetzen, wobei mit zunehmender Drehzahlabweichung auch die durch entsprechende Ventilansteuerung eingeführte Drosselwirkung zunehmen kann.

Bei dem in Fig. 1 dargestellten Ausgestaltungsbeispiel einer Bodenbearbeitungsmaschine 10 weisen die hinsichtlich ihrer Drehzahl miteinander zu vergleichenden Antriebsrollen 28, 30 grundsätzlich zueinander unterschiedliche Durchmesser auf. Dies bedeutet, dass auch in einem schlupffreien Zustand die als Bodenbearbeitungswalze 20 ausgeführte Antriebsrolle 28 eine andere, beispielsweise eine geringere Drehzahl aufweist, als die als Antriebsrad 18 bzw. als Antriebsradpaar ausgeführte Antriebsrolle 30. In diesem Falle kann als Referenzdrehzahl nicht jeweils unmittelbar die Drehzahl der anderen Antriebsrolle berücksichtigt werden, sondern es muss zunächst eine anhand des Verhältnisses der Außendurchmesser der beiden Antriebsrollen 28, 30 durchzuführende Normierung erfolgen. Ist beispielsweise die Drehzahl des im Durchmesser kleineren Antriebsrad 18 um 10% größer als die Drehzahl der im Durchmesser größeren Bodenbearbeitungswalze 20, so kann als Soll-Drehzahl für jedes als Antriebsrolle 30 wirksame Antriebsrad 18 die um einen entsprechenden Faktor geminderte Drehzahl der Bodenbearbeitungswalze 20 herangezogen werden bzw. es können entsprechend normierte Drehzahlen miteinander verglichen werden, um das Auftreten eines Schlupfzustands zu erkennen und dann durch Drosseln des Fluidstroms zu dem Fahr-Hydraulikmotor der zu schnell drehenden Antriebsrolle eine Angleichung der Drehzahlen zu erreichen.

Bei einer alternativen Ausgestaltung bzw. Vorgehensweise kann mit einem Drehzahlsensor in Zuordnung zu nur einer der beiden Antriebsrollen 28, 30 bzw. 20, 18 gearbeitet werden und als ergänzende Information die Drehzahl des Elektromotors 40 berücksichtigt werden, welche im Allgemeinen erfasst bzw. bereitgestellt wird, um diesen im gewünschten Betriebszustand betreiben zu können. Insbesondere dann, wenn, wie vorangehend erläutert, die Fahr-Hydraulikpumpe 42 mit konstantem Fördervolumen ausgebildet ist und die Fahr-Hydraulikmotoren 46, 48 mit konstantem Schluckvolumen ausgebildet sind, besteht ein definiertes Verhältnis zwischen der Drehzahl des die Fahr-Hydraulikpumpe 42 antreibenden Elektromotors 40 und der Drehzahl der Fahr-Hydraulikmotoren 46, 48. Wird durch die mit definierter Drehzahl angetriebene Fahr-Hydraulikpumpe 42 Fluid zu gleichen Anteilen in die beiden Fahr-Hydraulikmotoren 46, 48 geleitet, so treiben diese die zugeordneten Antriebsrollen mit einer durch die Bauart der Fahr-Hydraulikmotoren 46, 48 vorgegebenen, bekannten Drehzahl an. Weisen beide Fahr-Hydraulikmotoren 46, 48 die gleiche Bauart auf, treiben diese bei Speisung mit der gleichen Fluidmenge die zugeordneten Antriebsrollen mit der gleichen Drehzahl zur Drehung an.

Wird angenommen, dass beispielsweise eine der Antriebsrollen still steht, also nicht rotiert, während die andere Antriebsrolle durch den zugeordneten Fahr-Hydraulikmotor zur Drehung angetrieben wird, bedeutet dies, dass das gesamte von der Fahr-Hydraulikpumpe gelieferte Fluid durch den die rotierende Antriebsrolle antreibenden Fahr-Hydraulikmotor gespeist wird, was wiederum zur Folge hat, dass aufgrund des Umstandes, dass die von der Fahr-Hydraulikpumpe geförderte Fluidmenge bekannt ist und das Schluckvolumen des zur Drehung antreibenden Fahr-Hydraulikmotors bekannt ist, auch die Drehzahl, mit welcher dieser die zugeordnete Antriebsrolle zur Drehung antreibt, bekannt ist. Dies gilt auch dann, wenn, beispielsweise bedingt durch einen auftretenden Schlupf, die von den beiden Fahr-Hydraulikmotoren angetriebenen Antriebsrollen zueinander unterschiedliche bzw. von den für diesen jeweils vorgegebenen Soll-Drehzahlen abweichende Drehzahlen aufweisen. Aufgrund des Umstandes, dass für jede Drehzahl des Elektromotors 40 die von der Fahr-Hydraulikpumpe 42 geförderte Fluidmenge bekannt ist und mit der Erfassung der Drehzahl von einer der angetriebenen Antriebsrollen die in dem zugeordneten Fahr-Hydraulikmotor aufgenommene Fluidmenge bekannt ist, ist auch bekannt, welche Fluidmenge durch den anderen Fahr-Hydraulikmotor aufgenommen wird, wodurch wiederum aufgrund des bekannten Schluckvolumens desselben bestimmt werden kann, mit welcher Drehzahl die von diesem angetriebene Antriebsrolle rotiert. Auf diese Art und Weise kann in Zuordnung zu jeder der Antriebsrollen eine deren Drehzahl repräsentierende Drehzahlinformation bereitgestellt werden, wobei bei einer der Antriebsrollen diese Drehzahlinformation z.B. direkt messtechnisch bereitgestellt wird und bei der anderen Antriebsrolle diese Drehzahlinformation unter Berücksichtigung verschiedener Betriebsparameter, wie zum Beispiel der Drehzahl des Elektromotors 40, des Fördervolumens der Fahr-Hydraulikpumpe 42 sowie des jeweiligen Schluckvolumens der Fahr-Hydraulikmotoren 46, 48, ermittelt werden kann und als wesentlichen und variablen Eingangsparameter die Drehzahl des Elektromotors 40 beinhaltet.

Dies berücksichtigend, kann für jede der Antriebsrollen unter Verwendung eines Drehzahlsensors nur in Zuordnung zu einer der Antriebsrollen und unter Verwendung der in Zuordnung zum Elektromotor 40 bereitgestellte Information über dessen Drehzahl in Zuordnung zu jeder der Antriebsrollen eine deren Drehzahl repräsentierende Drehzahlinformation bereitgestellt werden. Auf der Grundlage dieser Drehzahlinformationen kann eine Schlupfzustandsinformation generiert werden, welche indiziert, ob die Antriebsrollen mit der zu erwartenden Soll-Drehzahl rotieren oder ob eine der Antriebsrollen in einem Schlupfzustand ist. Es können dann die voranstehend erläuternden Maßnahmen ergriffen werden, um die zu schnell rotierende Antriebsrolle abzubremsen und den Schlupfzustand zu beenden.

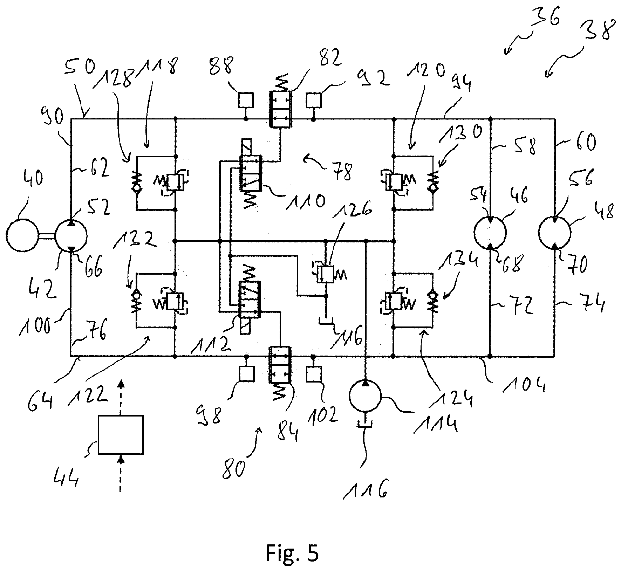

Eine weitere alternative Ausgestaltungsart eines elektrohydraulischen Antriebssystems 36 ist in Fig. 5 dargestellt. Bei diesem elektrohydraulischen Antriebssystem 36 ist die beispielsweise wiederum als Proportionalventil ausgebildete erste Ventileinheit 82 druckgesteuert. Durch Anlegen eines Ansteuerdrucks an die als Normal-Geschlossen-Ventil ausgebildete erste Ventileinheit 82 kann diese zwischen ihrer Sperrstellung und ihrer Offenstellung verstellt werden, um wahlweise eine Fluidströmungsverbindung zwischen den Leitungsabschnitten 90, 94 herzustellen oder zu unterbrechen bzw. zu drosseln. Entsprechend ist auch die zweite Ventileinheit 84 als druckgesteuertes Normal-Geschlossen-Ventil ausgebildet, welches bei Anlegen eines Steuerdrucks aus der normal eingenommenen Sperrstellung in die Offenstellung gebracht werden kann, um dadurch die Fluidströmungsverbindung zwischen den Leitungsabschnitten 100, 104 wahlweise freizugeben oder zu unterbrechen bzw. eine Drosselwirkung zu erzeugen.

Die Ventilanordnung 78 umfasst in Zuordnung zur ersten Ventileinheit 82 ein erstes Ansteuerventil 110. Das beispielsweise auch als Proportionalventil ausgebildete erste Ansteuerventil 110 steht unter der Ansteuerwirkung der Ansteuereinheit 44. Bei entsprechender Ansteuerung durch die Ansteuereinheit 44 wird das erste Ansteuerventil 110 aus seiner Sperrstellung, in welcher ein durch eine Fluidpumpe 114 generierter Fluiddruck nicht als Ansteuerdruck an die erste Ventileinheit 82 angelegt wird und diese ansteuerseitig im Wesentlichen drucklos ist bzw. zu einem Fluidreservoir 116 offen ist, in seine Offenstellung gebracht, wodurch ein durch eine Fluidpumpe 114 generierter Fluiddruck als Ansteuerdruck an die erste Ventileinheit 82 angelegt wird und diese entsprechend in ihre Offenstellung verstellt wird. Die Fluidpumpe 114 kann beispielsweise eine speziell dem elektrohydraulischen Antriebssystem 36 zugeordnete Fluidpumpe sein oder kann beispielsweise eine Fluidpumpe sein, welche ein elektrohydraulisches Lenksystem eines Bodenverdichters 10 mit Fluid speist und auch dazu ausgebildet und angeordnet ist, Fluid aus dem Fluidreservoir 116 in das elektrohydraulische Antriebssystem 36 nachzuspeisen.

Die Ventilanordnung 80 umfasst in Zuordnung zur zweiten Ventileinheit 84 ein ebenfalls als Proportionalventil ausgebildetes Ansteuerventil 112. Das unter der Ansteuerung der Ansteuereinheit 44 stehende Ansteuerventil 112 legt bei entsprechender Ansteuerung den durch die Fluidpumpe 114 generierten Fluiddruck als Ansteuerdruck an die zweite Ventileinheit 84 an, um diese entsprechend zwischen der Offenstellung und der Sperrstellung zu verstellen.

Die Ventilanordnung 78 umfasst in Zuordnung zum ersten Leitungsbereich 50 ferner ein erstes Überdruckventil 118 und ein zweites Überdruckventil 120. Gleichermaßen umfasst die Ventilanordnung 80 in Zuordnung zum zweiten Leitungsbereich 64 ein drittes Überdruckventil 122 und ein viertes Überdruckventil 124. Das erste Überdruckventil 118 verbindet den Leitungsabschnitt 90 des ersten Leitungsbereichs 50 über ein beispielsweise bei einem Druck von etwa 25 bar öffnendes Nachspeise-Überdruckventil 126 mit dem Fluidreservoir 116. Das zweite Überdruckventil 120 verbindet den Leitungsabschnitt 94 des ersten Leitungsbereichs 50 über das Nachspeise-Überdruckventil 126 mit dem Fluidreservoir 116. Das dritte Überdruckventil 122 verbindet den Leitungsabschnitt 100 des zweiten Leitungsbereichs 64 über das Nachspeise-Überdruckventil 126 mit dem Fluidreservoir 116. Das vierte Überdruckventil 124 verbindet den Leitungsabschnitt 104 über das Nachspeise-Überdruckventil 126 mit dem Fluidreservoir 116.

In Zuordnung zu jedem der Überdruckventile 118, 120, 122, 124 ist ein jeweiliges Rückschlagventil 128, 130, 132, 134 vorgesehen. Jedes in Zuordnung zu einem der Überdruckventile vorgesehene Rückschlagventil 128, 130, 132, 134 dient dazu, ein Ausströmen von Fluid aus einem jeweiligen Leitungsabschnitt, der durch ein jeweiliges Überdruckventil mit dem Fluidreservoir 116 verbunden werden kann, zu verhindern, ermöglicht jedoch ein Nachspeisen von durch die Fluidpumpe 114 gefördertem Fluid in diesen jeweiligen Leitungsabschnitt des ersten Leitungsbereichs 50 bzw. des zweiten Leitungsbereichs 64. Somit kann unter der Förderwirkung der Fluidpumpe 114 dann, wenn das elektrohydraulische Antriebssystem 36 zum Antreiben des Bodenverdichters 10 betrieben wird, Fluid in denjenigen Leitungsbereich 50 bzw. 64 nachgespeist werden, welcher dazu genutzt wird, das Fluid von den Fahr-Hydraulikmotoren 46, 48 zur Fahr-Hydraulikpumpe 52 zurückzuleiten.

Das in Fig. 5 dargestellte elektrohydraulische Antriebssystem 36 kann grundsätzlich so betrieben werden, wie die vorangehend mit Bezug auf die Fig. 3 und 4 beschriebenen elektrohydraulischen Antriebssysteme 36. Insbesondere kann dann, wenn ein mit diesem elektrohydraulischen Antriebssystem 36 ausgestatteter Bodenverdichter 10 in einem Fahrbetrieb ist und abgebremst werden soll und wenn erkannt wird, dass das durch den Elektromotor 40 generierte Bremsmoment in einem jeweiligen Betriebszustand nicht ausreicht, um den Bodenverdichter 10 im erforderlichen Ausmaß abzubremsen, die Fluidströmungsverbindung zwischen den Fahr-Hydraulikmotoren 46, 48 und der Fahr-Hydraulikpumpe 42 durch Ansteuerung des Ansteuerventils 110 bzw. 112 und entsprechend Ansteuerung der druckgesteuerten Ventileinheiten 82, 84 unterbrochen bzw. gedrosselt werden und dadurch ein Bremsmoment erzeugt werden. Bei Durchführung eines derartigen Bremsvorgangs kann, sowie vorangehend beschrieben, diejenige der beiden Ventilanordnungen 78, 80 zum Erzeugen eines Bremsmoments angesteuert bzw. betrieben werden, die demjenigen der beiden Leitungsbereich 50, 64 zugeordnet ist, über welchen Fluid von den Fahr-Hydraulikmotoren 46, 48 zur Fahr-Hydraulikpumpe 42 zurückströmt. In einem derartigen über die Ansteuereinheit 44 gesteuerten Bremszustand ist der Fluiddruck im Fahr-Hydraulikkreislauf 38 im Allgemeinen unter einem Grenz-Fluiddruck von beispielsweise etwa 400 bar, welcher zum Öffnen der Überdruckventile 118, 120, 122, 124 führen würde.

Tritt in einem derartigen Bodenverdichter 10 ein Fehlerzustand auf, beispielsweise ein Stromausfall, so gelangen die Ansteuerventile 110, 112 und entsprechend auch die erste Ventileinheit 82 und zweite Ventileinheit 84 in ihren Sperrzustand, in welchem die Fluidströmungsverbindung von bzw. zu den Fahr-Hydraulikmotoren 46, 48 in beiden Leitungsbereichen 50, 64 unterbrochen ist. Aufgrund der Trägheit des Bodenverdichters 10 arbeiten die Fahr-Hydraulikmotoren 46, 48 in diesem Zustand als Pumpen und erzeugen, abhängig von der vorhandenen Fahrrichtung des Bodenverdichters 10, im Leitungsabschnitt 94 oder im Leitungsabschnitt 104 einen starken Druckanstieg. Übersteigt der Fluiddruck den Grenz-Fluiddruck von beispielsweise etwa 400 bar, öffnet das einem derartigen Leitungsabschnitt zugeordnete Überdruckventil, so dass Fluid über eines der Rückschlagventile 130, 134 zurück zu den Fahr-Hydraulikmotoren 46, 48 strömen kann und die in diesem Zustand als Pumpen arbeitenden Fahr-Hydraulikmotoren 46,48 mit Fluid versorgt werden. Fördern beispielsweise die Fahr-Hydraulikmotoren 46, 48 Fluid in den Leitungsabschnitt 104, öffnet aufgrund des Umstandes, dass die zweite Ventileinheit 84 in ihrem Sperrzustand ist, das vierte Überdruckventil 124 und Fluid strömt über dieses und das Rückschlagventil 130 in den Leitungsabschnitt 94 und über diesen zu den Fahr-Hydraulikmotoren 46,48 zurück.

Ist in einem derartigen Zustand der Elektromotor 40 weiterhin mit elektrischer Spannung versorgt und wird daher weiterhin betrieben, steigt auch der Fluiddruck im Leitungsabschnitt 90 des ersten Leitungsbereichs 50 an und kann den Grenz-Fluiddruck übersteigen. In diesem Falle öffnet das erste Überdruckventil 118, so dass Fluid über das Rückschlagventil 132 zur Fahr-Hydraulikpumpe 42 zurückströmen kann.

Es ist darauf hinzuweisen, dass der vorangehend mit Bezug auf die Fig. 3, 4 und 5 beschriebenen Aufbau eines elektrohydraulischen Antriebssystems in verschiedensten Aspekten variiert werden kann. So kann beispielsweise, wie in Fig. 3 durch Strichlinien angedeutet, auch eine Parallelschaltung von mehr als zwei Fahr-Hydraulikmotoren vorgesehen sein, wobei, wie im Ausgestaltungsbeispiel der Fig. 3, jede der beiden Ventilanordnungen jeweils nur eine in einer jeweiligen Hauptleitung positionierte Ventileinheit umfassen kann, oder, wie in Fig. 4 veranschaulicht, in Zuordnung zu jedem der Fahr-Hydraulikmotoren jede Ventilanordnung eine separate Ventileinheit, ggf. mit einem zugeordneten Drucksensor der jeweiligen Drucksensoranordnung, umfassen kann. Die vorangehend beschriebenen Funktionalitäten zum Erzeugen eines ggf. zusätzlichen Bremsmomentes, zum Verhindern des Wegrollens beim Anfahren bergauf und zur Antischlupfregelung können in einem derartigen elektrohydraulischen Antriebssystem, insbesondere in dem elektrohydraulischen Antriebssystem der Fig. 4, jeweils einzeln oder in beliebiger Kombination miteinander realisiert sein.

## Patentansprüche

1. Bodenbearbeitungsmaschine, insbesondere Bodenverdichter, umfassend wenigstens eine zur Drehung angetriebene Antriebsrolle (28, 30) und ein elektrohydraulisches Antriebssystem (36) zum Antreiben wenigstens einer Antriebsrolle (28, 30), wobei das elektrohydraulische Antriebssystem (36) einen Fahr-Hydraulikkreislauf (38) mit jeweils wenigstens einem Fahr-Hydraulikmotor (46, 48) in Zuordnung zu wenigstens einer Antriebsrolle (28, 30) und wenigstens einer durch einen Elektromotor (40) angetriebenen Fahr-Hydraulikpumpe (42) zum Fördern von Fluid in dem Fahr-Hydraulikkreislauf (38) umfasst, wobei der Fahr-Hydraulikkreislauf (38) einen ersten Leitungsbereich (50) zwischen einem ersten Verbindungsanschluss (52) der wenigstens einen Fahr-Hydraulikpumpe (42) und einem jeweiligen ersten Verbindungsanschluss (54, 56) jedes Fahr-Hydraulikmotors (46, 48) zum Fördern von Fluid zu jedem Fahr-Hydraulikmotor (46, 48) zum Antreiben der wenigstens einen Antriebsrolle (28, 30) in einer ersten Drehrichtung sowie einen zweiten Leitungsbereich (64) zwischen einem zweiten Verbindungsanschluss (66) der wenigstens einen Fahr-Hydraulikpumpe (42) und einem jeweiligen zweiten Verbindungsanschluss (68, 70) jedes Fahr-Hydraulikmotors (46, 48) zum Fördern von Fluid zu jedem Fahr-Hydraulikmotor (46, 48) zum Antreiben der wenigstens einen Antriebsrolle (28, 30) in einer der ersten Drehrichtung entgegengesetzten zweiten Drehrichtung umfasst, wobei in Zuordnung zu jedem Leitungsbereich (50, 64) eine Ventilanordnung (78, 80) zum wahlweisen Unterbrechen und Freigeben einer Fluidströmungsverbindung zwischen der wenigstens einen Fahr-Hydraulikpumpe (42) und wenigstens einem Fahr-Hydraulikmotor (46, 48) vorgesehen ist, **dadurch gekennzeichnet, dass** in Zuordnung zu der im ersten Leitungsbereich (50) angeordneten Ventilanordnung (78) eine erste Drucksensoranordnung (86) vorgesehen ist, wobei die erste Drucksensoranordnung (86) wenigstens einen Drucksensor (88) zum Erfassen eines Fluiddrucks in einem Leitungsabschnitt (90) des ersten Leitungsbereichs (50) zwischen dem ersten Verbindungsanschluss (52) - der wenigstens einen Fahr-Hydraulikpumpe (42) und der im ersten Leitungsbereich (50) angeordneten Ventilanordnung (78) und wenigstens einen Drucksensor (92) zum Erfassen eines Fluiddrucks in einem Leitungsabschnitt (94) des ersten Leitungsbereichs (50) zwischen der im ersten Leitungsbereich (50) angeordneten Ventilanordnung (78) und dem wenigstens einen Fahr-Hydraulikmotor (46, 48) umfasst, oder/und dass in Zuordnung zu der im zweiten Leitungsbereich (64) angeordneten Ventilanordnung (80) eine zweite Drucksensoranordnung (96) vorgesehen ist, wobei die zweite Drucksensoranordnung (96) wenigstens einen Drucksensor (98) zum Erfassen eines Fluiddrucks in einem Leitungsabschnitt (100) des zweiten Leitungsbereichs (64) zwischen dem zweiten Verbindungsanschluss (66) der wenigstens einen Fahr-Hydraulikpumpe (42) und der im zweiten Leitungsbereich (64) angeordneten Ventilanordnung (80) und wenigstens einen Drucksensor (102) zum Erfassen eines Fluiddrucks in einem Leitungsabschnitt (104) des zweiten Leitungsbereichs (64) zwischen der im zweiten Leitungsbereich (64) angeordneten Ventilanordnung (86) und dem wenigstens einen Fahr-Hydraulikmotor (46, 48) umfasst.

2. Bodenbearbeitungsmaschine nach Anspruch 1,
**dadurch gekennzeichnet, dass** eine Mehrzahl von Antriebsrollen (28, 30) vorgesehen ist und jeder Antriebsrolle (28, 30) ein Fahr-Hydraulikmotor (46, 48) zugeordnet ist, wobei der erste Leitungsbereich (50) in Zuordnung zu jedem Fahr-Hydraulikmotor (46, 48) eine eine Fluidströmungsverbindung mit dem ersten Verbindungsanschluss (52) der wenigstens einen Fahr-Hydraulikpumpe (42) bereitstellende erste Motor-Zweigleitung (58, 60) umfasst und der zweite Leitungsbereich (64) in Zuordnung zu jedem Fahr-Hydraulikmotor (46, 48) eine eine Fluidströmungsverbindung mit dem zweiten Verbindungsanschluss (66) der wenigstens einen Fahr-Hydraulikpumpe (42) bereitstellende zweite Motor-Zweigleitung (72, 74) umfasst.

3. Bodenbearbeitungsmaschine nach Anspruch 1 oder 2,
**dadurch gekennzeichnet, dass** die in Zuordnung zum ersten Leitungsbereich (50) vorgesehene Ventilanordnung (78) eine erste Ventileinheit (82) umfasst, wobei die erste Ventileinheit (82) in Zuordnung zum ersten Leitungsbereich (50) zum wahlweisen Unterbrechen und Freigeben der Fluidströmungsverbindung zwischen der Fahr-Hydraulikpumpe (42) und jedem Fahr-Hydraulikmotor (46, 48) angeordnet ist, oder/und dass die in Zuordnung zum zweiten Leitungsbereich (64) vorgesehene Ventilanordnung (80) eine zweite Ventileinheit (84) umfasst, wobei die zweite Ventileinheit (84) in Zuordnung zum zweiten Leitungsbereich (64) zum wahlweisen Unterbrechen und Freigeben der Fluidströmungsverbindung zwischen der Fahr-Hydraulikpumpe (42) und jedem Fahr-Hydraulikmotor (46, 48) angeordnet ist.

4. Bodenbearbeitungsmaschine nach Anspruch 2 und Anspruch 3,
**dadurch gekennzeichnet, dass** der erste Leitungsbereich (50) eine die ersten Motor-Zweigleitungen (58, 60) mit dem ersten Verbindungsanschluss (52) der wenigstens einen Fahr-Hydraulikpumpe (42) verbindende erste Hauptleitung (62) umfasst und die erste Ventileinheit (82) in Zuordnung zur ersten Hauptleitung (62) angeordnet ist, oder/und dass der zweite Leitungsbereich (64) eine die zweiten Motor-Zweigleitungen (72, 74) mit dem zweiten Verbindungsanschluss (66) der wenigstens einen Fahr-Hydraulikpumpe (42) verbindende zweite Hauptleitung (76) umfasst und die zweite Ventileinheit (84) in Zuordnung zur zweiten Hauptleitung (76) angeordnet ist.

5. Bodenbearbeitungsmaschine nach Anspruch 2,
**dadurch gekennzeichnet, dass** die im ersten Leitungsbereich (50) vorgesehene Ventilanordnung (78) in Zuordnung zu jedem Fahr-Hydraulikmotor (46, 48) jeweils eine erste Ventileinheit (82', 82") zum wahlweisen Unterbrechen und Freigeben der Fluidströmungsverbindung zwischen der wenigstens einen Fahr-Hydraulikpumpe (42) und dem jeweils zugeordneten Fahr-Hydraulikmotor (46, 48) umfasst, oder/und dass die im zweiten Leitungsbereich (64) vorgesehene Ventilanordnung (80) in Zuordnung zu jedem Fahr-Hydraulikmotor (46, 48) jeweils eine zweite Ventileinheit (84', 84") zum wahlweisen Unterbrechen und Freigeben der Fluidströmungsverbindung zwischen der wenigstens einen Fahr-Hydraulikpumpe (42) und dem jeweils zugeordneten Fahr-Hydraulikmotor (46, 48) umfasst.

6. Bodenbearbeitungsmaschine nach Anspruch 5,
**dadurch gekennzeichnet, dass** bei jedem Fahr-Hydraulikmotor (46, 48) die diesem Fahr-Hydraulikmotor (46, 48) zugeordnete erste Ventileinheit (82', 82") in Zuordnung zu der diesen Fahr-Hydraulikmotor (46, 48) mit dem ersten Verbindungsanschluss (52) der wenigstens einen Fahr-Hydraulikpumpe (42) verbindenden ersten Motor-Zweigleitung (58, 60) angeordnet ist, oder/und dass bei jedem Fahr-Hydraulikmotor (46, 48) die diesem Fahr-Hydraulikmotor (46, 48) zugeordnete zweite Ventileinheit (84', 84") in Zuordnung zu der diesen Fahr-Hydraulikmotor (46, 48) mit dem zweiten Verbindungsanschluss (66) der wenigstens einen Fahr-Hydraulikpumpe (42) verbindenden zweiten Motor-Zweigleitung (72, 74) angeordnet ist.

7. Bodenbearbeitungsmaschine nach Anspruch 5 oder 6,
**dadurch gekennzeichnet, dass** der erste Leitungsbereich (50) eine die ersten Motor-Zweigleitungen (58, 60) mit dem ersten Verbindungsanschluss (52) der wenigstens einen Fahr-Hydraulikpumpe (42) verbindende erste Hauptleitung (62) umfasst, oder/und dass der zweite Leitungsbereich (64) eine die zweiten Motor-Zweigleitungen (72, 74) mit dem zweiten Verbindungsanschluss (66) der wenigstens einen Fahr-Hydraulikpumpe (42) verbindende zweite Hauptleitung (76) umfasst.

8. Bodenbearbeitungsmaschine nach einem der Ansprüche 3-7,
**dadurch gekennzeichnet, dass** wenigstens eine erste Ventileinheit (82; 82', 82") oder/und wenigstens eine zweite Ventileinheit (84; 84', 84") ein Proportionalventil umfasst.

9. Bodenbearbeitungsmaschine nach Anspruch 8,
**dadurch gekennzeichnet, dass** wenigstens eine erste Ventileinheit (82; 82', 82") oder/und wenigstens eine zweite Ventileinheit (84; 84', 84") unter der Ansteuerung einer Ansteuereinheit (44) steht und durch die Ansteuereinheit (44) zum wahlweisen Unterbrechen und Freigeben der Fluidströmungsverbindung zwischen der wenigstens einen Fahr-Hydraulikpumpe (42) und wenigstens einem Fahr-Hydraulikmotor (46,48) ansteuerbar ist.

10. Bodenbearbeitungsmaschine nach Anspruch 8 oder 9,
**dadurch gekennzeichnet, dass** wenigstens eine erste Ventileinheit (82; 82', 82") oder/und wenigstens eine zweite Ventileinheit (84; 84', 84") druckgesteuert ist, wobei in Zuordnung zu jeder druckgesteuerten ersten Ventileinheit (82; 82', 82") und jeder druckgesteuerten zweiten Ventileinheit (84; 84', 84") ein unter der Ansteuerung einer Ansteuereinheit (44) stehendes Ansteuerventil (110, 112) vorgesehen ist zum Anlegen eines Steuerdrucks an die zugeordnete Ventileinheit von erster Ventileinheit (82; 82', 82") und zweiter Ventileinheit (84; 84', 84") zum wahlweisen Unterbrechen und Freigeben der Fluidströmungsverbindung zwischen der wenigstens einen Fahr-Hydraulikpumpe (42) und wenigstens einem Fahr-Hydraulikmotor (46,48).

11. Bodenbearbeitungsmaschine nach einem der Ansprüche 3-10,
**dadurch gekennzeichnet, dass** wenigstens eine erste Ventileinheit (82; 82', 82") oder/und wenigstens eine zweite Ventileinheit (84; 84', 84") eine Normal-Geschlossen-Ventileinheit ist.

12. Bodenbearbeitungsmaschine nach einem der Ansprüche 1-11,
**dadurch gekennzeichnet, dass** die in Zuordnung zum ersten Leitungsbereich (50) vorgesehene Ventilanordnung (78) wenigstens ein Überdruckventil (118, 120) zum Rückspeisen von Fluid zu dem wenigstens einen Fahr-Hydraulikmotor (46, 48) bei Überschreiten eines Fluid-Grenzdrucks im ersten Leitungsbereich (50) umfasst, oder/und dass die in Zuordnung zum zweiten Leitungsbereich (64) vorgesehene Ventilanordnung (80) wenigstens ein Überdruckventil (122, 124) zum Rückspeisen von Fluid zu dem wenigstens einen Fahr-Hydraulikmotor (46, 48) bei Überschreiten eines Fluid-Grenzdrucks im zweiten Leitungsbereich (64) umfasst.

13. Bodenbearbeitungsmaschine nach Anspruch 12, sofern auf Anspruch 3 oder Anspruch 5 rückbezogen,
**dadurch gekennzeichnet, dass** die in Zuordnung zum ersten Leitungsbereich (50) vorgesehene Ventilanordnung (78) in Zuordnung zu einem Leitungsabschnitt (90) des ersten Leitungsbereich (50) zwischen der wenigstens einen Fahr-Hydraulikpumpe (42) und jeder ersten Ventileinheit (82; 82', 82") ein erstes Überdruckventil (118) umfasst und in Zuordnung zu einem Leitungsabschnitt (94) zwischen jeder ersten Ventileinheit (82; 82', 82") und dem wenigstens einen Fahr-Hydraulikmotor (46, 48) ein zweites Überdruckventil (120) umfasst, oder/und dass die in Zuordnung zum zweiten Leitungsbereich (64) vorgesehene Ventilanordnung (80) in Zuordnung zu einem Leitungsabschnitt (100) des zweiten Leitungsbereich (64) zwischen der wenigstens einen Fahr-Hydraulikpumpe (42) und jeder zweiten Ventileinheit (84; 84', 84") ein drittes Überdruckventil (122) umfasst und in Zuordnung zu einem Leitungsabschnitt (104) zwischen jeder zweiten Ventileinheit (84; 84', 84") und dem wenigstens einen Fahr-Hydraulikmotor (46, 48) ein viertes Überdruckventil (124) umfasst.

14. Bodenbearbeitungsmaschine nach Anspruch 5 oder einem der Ansprüche 6-13, sofern auf Anspruch 5 rückbezogen,
**dadurch gekennzeichnet, dass** die erste Drucksensoranordnung (86) in Zuordnung zu jeder ersten Motor-Zweigleitung (58, 60) jeweils einen Drucksensor (92', 92") zum Erfassen eines Fluiddrucks in einem Leitungsabschnitt einer jeweiligen ersten Motor-Zweigleitung (58, 60) zwischen der dieser zugeordneten ersten Ventileinheit (82', 82") und dem dieser zugeordneten Fahr-Hydraulikmotor (46, 48) umfasst, oder/und dass die zweite Drucksensoranordnung (96) in Zuordnung zu jeder zweiten Motor-Zweigleitung (72, 74) jeweils einen Drucksensor (102', 102") zum Erfassen eines Fluiddrucks in einem Leitungsabschnitt einer jeweiligen zweiten Motor-Zweigleitung (72, 74) zwischen der dieser zugeordneten zweiten Ventileinheit (84', 84") und dem dieser zugeordneten Fahr-Hydraulikmotor (46, 48) umfasst.

15. Bodenbearbeitungsmaschine nach einem der Ansprüche 1-14,
**dadurch gekennzeichnet, dass** in Zuordnung zu wenigstens einer, vorzugsweise jeder Antriebsrolle (28, 30) jeweils ein Drehzahlsensor (106, 108) vorgesehen ist zum Bereitstellen von eine Drehzahl einer jeweiligen Antriebsrolle (28, 30) repräsentierender Drehzahlinformation.

16. Bodenbearbeitungsmaschine nach einem der Ansprüche 1-15,
**dadurch gekennzeichnet, dass** wenigstens eine Antriebsrolle (28, 30) eine Bodenbearbeitungswalze (20, 32) mit einem Metallmantel (22, 34) umfasst, oder/und dass wenigstens eine Antriebsrolle (28, 30) wenigstens ein Antriebsrad (18), vorzugsweise ein Antriebsradpaar, umfasst, oder/und dass wenigstens eine Antriebsrolle (28, 30) wenigstens eine Gummiradwalze, vorzugsweise ein Gummiradwalzenpaar, umfasst.

17. Verfahren zum Betreiben einer Bodenbearbeitungsmaschine (10) nach einem der vorangehenden Ansprüche, umfassend die Maßnahmen:
c) in einem Stillstandzustand, Stellen der im ersten Leitungsbereich (50) angeordneten Ventilanordnung (78) in einen die Fluidströmung im ersten Leitungsbereich (50) unterbrechenden Sperrzustand und Stellen der im zweiten Leitungsbereich angeordneten Ventilanordnung (80) in einen die Fluidströmung im zweiten Leitungsbereich (64) unterbrechenden Sperrzustand,
d) in dem Stillstandzustand, Erfassen eines ersten Fluiddrucks in einem Leitungsabschnitt (94) des ersten Leitungsbereichs (50) zwischen der im ersten Leitungsbereich (50) angeordneten Ventilanordnung (78) und dem wenigstens einen Fahr-Hydraulikmotor (46, 48) und Erfassen eines zweiten Fluiddrucks in einem Leitungsabschnitt (104) des zweiten Leitungsbereichs (64) zwischen der im zweiten Leitungsbereich (64) angeordneten Ventilanordnung (80) und dem wenigstens einen Fahr-Hydraulikmotor (46, 48),
e) bei Beendigung des Stillstandzustandes zum Übergang in einen Antriebszustand, Ansteuern des der wenigstens einen Fahr-Hydraulikpumpe (42) zugeordneten Elektromotors (40) unter Berücksichtigung des bei der Maßnahme d) erfassten ersten Fluiddrucks oder des bei der Maßnahme d) erfassten zweiten Fluiddrucks.

18. Verfahren nach Anspruch 17, ferner umfassend die Maßnahmen:
a) in einem Antriebszustand, Antreiben der wenigstens einen Fahr-Hydraulikpumpe (42) derart, dass Fluid über einen Leitungsbereich von erstem Leitungsbereich (50) und zweitem Leitungsbereich (64) zu dem wenigstens einen Fahr-Hydraulikmotor (46, 48) gefördert wird und Fluid über den anderen Leitungsbereich von erstem Leitungsbereich (50) und zweitem Leitungsbereich (64) zu der wenigstens einen Fahr-Hydraulikpumpe (42) zurückströmt,
b) in einem auf den Antriebszustand folgenden Bremszustand, Unterbrechen oder Drosseln einer Fluidströmung in dem anderen Leitungsbereich vermittels der in dem anderen Leitungsbereich angeordneten Ventilanordnung (78, 80).

19. Verfahren nach Anspruch 18,
**dadurch gekennzeichnet, dass** bei der Maßnahme a) die im ersten Leitungsbereich (50) angeordnete Ventilanordnung (78) in einem die Fluidströmung im ersten Leitungsbereich (50) im Wesentlichen nicht drosselnden Offenzustand ist und die im zweiten Leitungsbereich (64) angeordnete Ventilanordnung (80) in einem die Fluidströmung im zweiten Leitungsbereich (64) im Wesentlichen nicht drosselnden Offenzustand ist.

20. Verfahren nach einem der Ansprüche 17-19,
**dadurch gekennzeichnet, dass** bei der Maßnahme e) der der wenigstens einen Fahr-Hydraulikpumpe (42) zugeordnete Elektromotor (40) unter Berücksichtigung des höheren Fluiddrucks von erstem Fluiddruck und zweitem Fluiddruck angesteuert wird.

21. Verfahren nach Anspruch 20,
**dadurch gekennzeichnet, dass** bei der Maßnahme d) oder/ und der Maßnahme e) ein dritter Fluiddrucks in einem Leitungsabschnitt (90) des ersten Leitungsbereichs (50) zwischen der wenigstens einen Fahr-Hydraulikpumpe (42) und der im ersten Leitungsbereich (50) angeordneten Ventilanordnung (78) oder/und ein vierter Fluiddruck in einem Leitungsabschnitt (100) des zweiten Leitungsbereichs (64) zwischen der wenigstens einen Fahr-Hydraulikpumpe (42) und der im zweiten Leitungsbereich (64) angeordneten Ventilanordnung (80) erfasst wird, und dass bei der Maßnahme e) dann, wenn der erste Fluiddruck höher ist als der zweite Fluiddruck, der der wenigstens einen Fahr-Hydraulikpumpe (42) zugeordnete Elektromotor (40) derart zum Fördern von Fluid in den ersten Leitungsbereich (50) angesteuert wird, dass der dritte Fluiddruck im Wesentlichen dem ersten Fluiddruck entspricht, und dass bei der Maßnahme e) dann, wenn der zweite Fluiddruck höher ist als der erste Fluiddruck, der der wenigstens einen Fahr-Hydraulikpumpe (42) zugeordnete Elektromotor (40) derart zum Fördern von Fluid in den zweiten Leitungsbereich (64) angesteuert wird, dass der vierte Fluiddruck im Wesentlichen dem zweiten Fluiddruck entspricht.

22. Verfahren nach Anspruch 21,
**dadurch gekennzeichnet, dass** bei der Maßnahme e) die Ventilanordnungen (78, 80) dann aus dem Sperrzustand in einen Offenzustand gestellt werden, wenn der dritte Fluiddruck im Wesentlichen dem ersten Fluiddruck entspricht oder wenn der vierte Fluiddruck im Wesentlichen dem zweiten Fluiddruck entspricht.

23. Verfahren nach Anspruch 22,
**dadurch gekennzeichnet, dass** nach dem Stellen der Ventilanordnungen (78, 80) in den Offenzustand der der wenigstens einen Fahr-Hydraulikpumpe zugeordnete Elektromotor zum weiteren Erhöhen des Fluiddrucks angesteuert wird.

24. Verfahren nach einem der Ansprüche 17-23, ferner umfassend die Maßnahmen:
f) in einem Antriebszustand, Antreiben der wenigstens einen Fahr-Hydraulikpumpe (42) derart, dass Fluid über einen Leitungsbereich von erstem Leitungsbereich (50) und zweitem Leitungsbereich (64) zu einem einer ersten Antriebsrolle (28) zugeordneten ersten Fahr-Hydraulikmotor (46) und zu einem einer zweiten Antriebsrolle (30) zugeordneten zweiten Fahr-Hydraulikmotor (48) gefördert wird und Fluid über den anderen Leitungsbereich von erstem Leitungsbereich (50) und zweitem Leitungsbereich (64) von dem ersten Fahr-Hydraulikmotor (46) und dem zweiten Fahr-Hydraulikmotor (48) zu der wenigstens einen Fahr-Hydraulikpumpe (42) zurückströmt,
g) in dem Antriebszustand, Bereitstellen einer Schlupfzustandsinformation auf der Grundlage einer eine Drehzahl der ersten Antriebsrolle (28) repräsentierenden ersten Drehzahlinformation oder/und einer eine Drehzahl der zweiten Antriebsrolle (30) repräsentierenden zweiten Drehzahlinformation,
h) dann, wenn die Schlupfzustandsinformation bei einer Antriebsrolle von erster Antriebsrolle (28) und zweiter Antriebsrolle (30) im Vergleich zur anderen Antriebsrolle von erster Antriebsrolle (28) und zweiter Antriebsrolle (30) eine zu hohe Drehzahl indiziert, Drosseln des Fluidstroms zu dem der einen Antriebsrolle zugeordneten Fahr-Hydraulikmotor von erstem Fahr-Hydraulikmotor (46) und zweitem Fahr-Hydraulikmotor (48) vermittels der im ersten Leitungsbereich (50) angeordneten Ventilanordnung (78) oder/und der im zweiten Leitungsbereich (64) angeordneten Ventilanordnung (80).

25. Verfahren nach Anspruch 24,
**dadurch gekennzeichnet, dass** bei der Maßnahme h) der Fluidstrom zu dem der einen Antriebsrolle zugeordneten Fahr-Hydraulikmotor von erstem Fahr-Hydraulikmotor (46) und zweitem Fahr-Hydraulikmotor (48) vermittels der im anderen Leitungsbereich von erstem Leitungsbereich (50) und zweitem Leitungsbereich (64) angeordneten Ventilanordnung (78, 80) gedrosselt wird.

26. Verfahren nach Anspruch 24 oder 25,
**dadurch gekennzeichnet, dass** bei der Maßnahme h) die im ersten Leitungsbereich (50) angeordnete Ventilanordnung (78) oder/und die im zweiten Leitungsbereich (64) angeordnete Ventilanordnung (80) dann zum Drosseln des Fluidstroms zu dem der einen Antriebsrolle zugeordneten Fahr-Hydraulikmotor angesteuert wird, wenn eine Drehzahlinformation von erster Drehzahlinformation und zweiter Drehzahlinformation eine über einer Soll-Drehzahl der zugeordneten Antriebsrolle liegende Drehzahl indiziert, wobei die Soll-Drehzahl auf der Grundlage der ersten Drehzahlinformation oder/und der zweiten Drehzahlinformation bestimmt wird.

## Claims

1. A soil processing machine, in particular a soil compactor, comprising at least one drive roller (28, 30) driven to rotate and an electrohydraulic drive system (36) for driving at least one drive roller (28, 30), wherein the electrohydraulic drive system (36) has a traction hydraulic circuit (38) having at least one traction hydraulic motor (46, 48) in association with at least one drive roller (28, 30) and at least one traction hydraulic pump (42) driven by an electric motor (40) for conveying fluid in the traction hydraulic circuit (38), wherein the traction hydraulic circuit (38) comprises a first line region (50) between a first connection fitting (52) of the at least one traction hydraulic pump (42) and a respective first connection fitting (54, 56) of each traction hydraulic motor (46, 48) for conveying fluid to each traction hydraulic motor (46, 48) to drive the at least one drive roller (28, 30) in a first direction of rotation and a second line region (64) between a second connection fitting (66) of the at least one traction hydraulic pump (42) and a respective second connection fitting (68, 70) of each traction hydraulic motor (46, 48) for conveying fluid to each traction hydraulic motor (46, 48) to drive the at least one drive roller (28, 30) in a second direction of rotation opposite to the first direction of rotation, wherein a valve assembly (78, 80) is provided in association with each line region (50, 64) for selectively interrupting and releasing a fluid flow connection between the at least one traction hydraulic pump (42) and at least one traction hydraulic motor (46, 48),
**characterized in that** a first pressure sensor arrangement (86) is provided in association with the valve assembly (78) arranged in the first line region (50), wherein the first pressure sensor arrangement (86) comprises at least one pressure sensor (88) for detecting a fluid pressure in a line section (90) of the first line region (50) between the first connection fitting (52) of the at least one traction hydraulic pump (42) and the valve assembly (78) arranged in the first line region (50) and at least one pressure sensor (92) for detecting a fluid pressure in a line section (94) of the first line region (50) between the valve assembly (78) arranged in the first line region (50) and the at least one traction hydraulic motor (46, 48), and/or **in that** a second pressure sensor arrangement (96) is provided in association with the valve assembly (80) arranged in the second line region (64), wherein the second pressure sensor arrangement (96) comprises at least one pressure sensor (98) for detecting a fluid pressure in a line section (100) of the second line region (64) between the second connection fitting (66) of the at least one traction hydraulic pump (42) and the valve assembly (80) arranged in the second line region (64) and at least one pressure sensor (102) for detecting a fluid pressure in a line section (104) of the second line region (64) between the valve assembly (86) arranged in the second line region (64) and the at least one traction hydraulic motor (46, 48).

2. The soil processing machine as claimed in claim 1,
**characterized in that** a plurality of drive rollers (28, 30) is provided and each drive roller (28, 30) is assigned a traction hydraulic motor (46, 48), wherein the first line region (50), associated with each traction hydraulic motor (46, 48), comprises a first motor branch line (58, 60) providing a fluid flow connection to the first connection fitting (52) of the at least one traction hydraulic pump (42), and the second line region (64), associated with each traction hydraulic motor (46, 48), comprises a second motor branch line (72, 74) providing a fluid flow connection to the second connection fitting (66) of the at least one traction hydraulic pump (42).

3. The soil processing machine as claimed in claim 1 or 2,
**characterized in that** the valve assembly (78) provided in association with the first line region (50) comprises a first valve unit (82), wherein the first valve unit (82) is arranged in association with the first line region (50) for selectively interrupting and releasing the fluid flow connection between the traction hydraulic pump (42) and each traction hydraulic motor (46, 48), and/or **in that** the valve assembly (80) provided in association with the second line region (64) comprises a second valve unit (84), wherein the second valve unit (84) is arranged in association with the second line region (64) for selectively interrupting and releasing the fluid flow connection between the traction hydraulic pump (42) and each traction hydraulic motor (46, 48).

4. The soil processing machine as claimed in claim 2 and claim 3,
**characterized in that** the first line region (50) comprises a first main line (62) connecting the first motor branch lines (58, 60) to the first connection fitting (52) of the at least one traction hydraulic pump (42) and the first valve unit (82) is arranged in association with the first main line (62), and/or **in that** the second line region (64) comprises a second main line (76) connecting the second motor branch lines (72, 74) to the second connection fitting (66) of the at least one traction hydraulic pump (42) and the second valve unit (84) is arranged in association with the second main line (76).

5. The soil processing machine as claimed in claim 2,
**characterized in that** the valve assembly (78) provided in the first line region (50) respectively comprises a first valve unit (82', 82") in association with each traction hydraulic motor (46, 48) for selectively interrupting and releasing the fluid flow connection between the at least one traction hydraulic pump (42) and the respective assigned traction hydraulic motor (46, 48), and/or **in that** the valve assembly (80) provided in the second line region (64) respectively comprises a second valve unit (84', 84") in association with each traction hydraulic motor (46, 48) for selectively interrupting and releasing the fluid flow connection between the at least one traction hydraulic pump (42) and the respective associated traction hydraulic motor (46, 48).

6. The soil processing machine as claimed in claim 5,
**characterized in that,** for each traction hydraulic motor (46, 48), the first valve unit (82', 82") assigned to this traction hydraulic motor (46, 48) is arranged in association with the first motor branch line (58, 60) connecting this traction hydraulic motor (46, 48) to the first connection fitting (52) of the at least one traction hydraulic pump (42), and/or **in that**, for each traction hydraulic motor (46, 48), the second valve unit (84', 84") assigned to this traction hydraulic motor (46, 48) is arranged in association with the second motor branch line (72, 74) connecting this traction hydraulic motor (46, 48) to the second connection fitting (66) of the at least one traction hydraulic pump (42).

7. The soil processing machine as claimed in claim 5 or 6,
**characterized in that** the first line region (50) comprises a first main line (62) connecting the first motor branch lines (58, 60) to the first connection fitting (52) of the at least one traction hydraulic pump (42), and/or **in that** the second line region (64) comprises a second main line (76) connecting the second motor branch lines (72, 74) to the second connection fitting (66) of the at least one traction hydraulic pump (42).

8. The soil processing machine as claimed in any one of claims 3-7,
**characterized in that** at least one first valve unit (82; 82', 82") and/or at least one second valve unit (84; 84', 84") comprises a proportional valve.

9. The soil processing machine as claimed in claim 8,
**characterized in that** at least one first valve unit (82; 82', 82") and/or at least one second valve unit (84; 84', 84") is under the actuation of an actuation unit (44) and is actuatable by the actuation unit (44) for selectively interrupting and releasing the fluid flow connection between the at least one traction hydraulic pump (42) and at least one traction hydraulic motor (46, 48).

10. The soil processing machine as claimed in claim 8 or 9,
**characterized in that** at least one first valve unit (82; 82', 82") and/or at least one second valve unit (84; 84', 84") is pressure-controlled, wherein each pressure-controlled first valve unit (82; 82', 82") and each pressure-controlled second valve unit (84; 84', 84") is assigned an actuation valve (110, 112) under the actuation of an actuation unit (44) for applying a control pressure to the assigned valve unit of the first valve unit (82; 82', 82") and second valve unit (84; 84', 84") for selectively interrupting and releasing the fluid flow connection between the at least one traction hydraulic pump (42) and at least one traction hydraulic motor (46,48).

11. The soil processing machine as claimed in any one of claims 3-10,
**characterized in that** at least one first valve unit (82; 82', 82") and/or at least one second valve unit (84; 84', 84") is a normally closed valve unit.

12. The soil processing machine as claimed in any one of claims 1-11,
**characterized in that** the valve assembly (78) provided in association with the first line region (50) comprises at least one pressure relief valve (118, 120) for feeding fluid back to the at least one traction hydraulic motor (46, 48) when a fluid limiting pressure is exceeded in the first line region (50), and/or **in that** the valve assembly (80) provided in association with the second line region (64) comprises at least one pressure relief valve (122, 124) for feeding fluid back to the at least one traction hydraulic motor (46, 48) when a fluid limiting pressure is exceeded in the second line region (64).

13. The soil processing machine as claimed in claim 12, if referring back to claim 3 or claim 5,
**characterized in that** the valve assembly (78) provided in association with the first line region (50), in association with a line section (90) of the first line region (50) between the at least one traction hydraulic pump (42) and each first valve unit (82 ; 82', 82"), comprises a first pressure relief valve (118) and, in association with a line section (94) between each first valve unit (82; 82', 82") and the at least one traction hydraulic motor (46, 48), comprises a second pressure relief valve (120), and/or **in that** the valve assembly (80) provided in association with the second line region (64), in association with a line section (100) of the second line region (64) between the at least one traction hydraulic pump (42) and each second valve unit (84; 84', 84"), comprises a third pressure relief valve (122) and, in association with a line section (104) between each second valve unit (84; 84', 84") and the at least one traction hydraulic motor (46, 48), comprises a fourth pressure relief valve (124).

14. The soil processing machine as claimed in claim 5 or one of claims 6-13, if referring back to claim 5,
**characterized in that** the first pressure sensor arrangement (86) comprises, in association with each first motor branch line (58, 60), a respective pressure sensor (92', 92") for detecting a fluid pressure in a line section of a respective first motor branch line (58, 60) between the first valve unit (82', 82") assigned thereto and the traction hydraulic motor (46, 48) assigned thereto, and/or **in that** the second pressure sensor arrangement (96) respectively comprises, in association with each second motor branch line (72, 74), a pressure sensor (102', 102") for detecting a fluid pressure in a line section of a respective second motor branch line (72, 74) between the second valve unit (84', 84") assigned thereto and the traction hydraulic motor (46, 48) assigned thereto.

15. The soil processing machine as claimed in any one of claims 1-14,
**characterized in that** in association with at least one, preferably each drive roller (28, 30), a speed sensor (106, 108) is provided for providing speed information representing a speed of a respective drive roller (28, 30).

16. The soil processing machine as claimed in any of claims 1-15,
**characterized in that** at least one drive roller (28, 30) comprises a soil processing roller (20, 32) having a metal casing (22, 34), and/or **in that** at least one drive roller (28, 30) comprises at least one drive wheel (18), preferably a pair of drive wheels, and/or **in that** at least one drive roller (28, 30) comprises at least one rubber-wheel roller, preferably a pair of rubber-wheel rollers.

17. A method for operating a soil processing machine (10) as claimed in any one of the preceding claims, comprising the measures:
c) in a standstill state, switching the valve assembly (78) arranged in the first line region (50) into a blocking state interrupting the fluid flow in the first line region (50) and switching the valve assembly (80) arranged in the second line region into a blocking state interrupting the fluid flow in the second line region (64),
d) in the standstill state, detecting a first fluid pressure in a line section (94) of the first line region (50) between the valve assembly (78) arranged in the first line region (50) and the at least one traction hydraulic motor (46, 48) and detecting a second fluid pressure in a line section (104) of the second line region (64) between the valve assembly (80) arranged in the second line region (64) and the at least one traction hydraulic motor (46, 48),
e) upon ending of the standstill state for the transition to a drive state, actuating the electric motor (40) assigned to the at least one traction hydraulic pump (42), taking into consideration the first fluid pressure detected in measure d) or the second fluid pressure detected in measure d).

18. The method according to claim 17, further comprising the measures:
a) in a drive state, driving the at least one traction hydraulic pump (42) in such a way that fluid is conveyed via one line region of the first line region (50) and second line region (64) to the at least one traction hydraulic motor (46, 48) and fluid flows back via the other line region of the first line region (50) and second line region (64) to the at least one traction hydraulic pump (42),
b) in a braking state following the drive state, interrupting or throttling a fluid flow in the other line region by means of the valve assembly (78, 80) arranged in the other line region.

19. The method as claimed in claim 18,
**characterized in that** in measure a), the valve assembly (78) arranged in the first line region (50) is in an open state that essentially does not throttle the fluid flow in the first line region (50) and the valve assembly (80) arranged in the second line region (64) is in an open state that essentially does not throttle the fluid flow in the second line region (64).

20. The method as claimed in one of claims 17-19,
**characterized in that** in measure e), the electric motor (40) assigned to the at least one traction hydraulic pump (42) is actuated taking into consideration the higher fluid pressure of the first fluid pressure and second fluid pressure.

21. The method as claimed in claim 20,
**characterized in that** in measure d) and/or measure e), a third fluid pressure in a line section (90) of the first line region (50) between the at least one traction hydraulic pump (42) and the valve assembly (78) arranged in the first line region (50) and/or a fourth fluid pressure in a line section (100) of the second line region (64) between the at least one traction hydraulic pump (42) and the valve assembly (80) arranged in the second line region (64) is detected, and **in that** in measure e), if the first fluid pressure is higher than the second fluid pressure, the electric motor (40) assigned to the at least one traction hydraulic pump (42) is actuated to convey fluid into the first line region (50) in such a way that the third fluid pressure essentially corresponds to the first fluid pressure, and **in that** in measure e), if the second fluid pressure is higher than the first fluid pressure, the electric motor (40) assigned to the at least one traction hydraulic pump (42) is actuated to convey fluid into the second line region (64) in such a way that the fourth fluid pressure essentially corresponds to the second fluid pressure.

22. The method as claimed in claim 21,
**characterized in that** in measure e), the valve assemblies (78, 80) are switched from the blocking state to an open state when the third fluid pressure essentially corresponds to the first fluid pressure or when the fourth fluid pressure essentially corresponds to the second fluid pressure.

23. The method as claimed in claim 22,
**characterized in that** after the valve assemblies (78, 80) have been switched into the open state, the electric motor assigned to the at least one traction hydraulic pump is actuated to further increase the fluid pressure.

24. The method as claimed in any one of claims 17-23, further comprising the measures:
f) in a drive state, driving the at least one traction hydraulic pump (42) in such a way that fluid is conveyed via a line region of the first line region (50) and second line region (64) to a first traction hydraulic motor (46) assigned to a first drive roller (28) and to a second traction hydraulic motor (48) assigned to a second drive roller (30) and fluid flows back via the other line region of the first line region (50) and the second line region (64) from the first traction hydraulic motor (46) and the second traction hydraulic motor (48) to the at least one traction hydraulic pump (42),
g) in the drive state, providing slip state information based on first speed information representing a speed of the first drive roller (28) and/or second speed information representing a speed of the second drive roller (30),
h) if the slip state information indicates an excessively high speed in one drive roller of the first drive roller (28) and second drive roller (30) in comparison to the other drive roller of the first drive roller (28) and second drive roller (30), throttling the fluid flow to the traction hydraulic motor of the first traction hydraulic motor (46) and second traction hydraulic motor (48) by means of the valve assembly (78) arranged in the first line region (50) and/or the valve assembly (80) arranged in the second line region (64).

25. The method as claimed in claim 24,
**characterized in that** in measure h), the fluid flow to the traction hydraulic motor assigned to one drive roller of the first traction hydraulic motor (46) and the second traction hydraulic motor (48) is throttled by means of the valve assembly (78, 80) arranged in the other line region of the first line region (50) and second line region (64).

26. The method as claimed in claim 24 or 25,
**characterized in that** in measure h), the valve assembly (78) arranged in the first line region (50) and/or the valve assembly (80) arranged in the second line region (64) is actuated to throttle the fluid flow to the traction hydraulic motor assigned to the one drive roller if speed information of the first speed information and second speed information indicates a speed that is above a target speed of the assigned drive roller, wherein the target speed is determined based on the first speed information and/or the second speed information.

## Revendications

1. Une machine de traitement du sol, en particulier un compacteur de sol, comprenant au moins un rouleau d'entraînement (28, 30) entraîné en rotation et un système d'entraînement électrohydraulique (36) pour entraîner au moins un rouleau d'entraînement (28, 30), dans lequel le système d'entraînement électrohydraulique (36) a un circuit hydraulique de traction (38) avec au moins un moteur hydraulique de traction (46, 48) en association avec au moins un rouleau d'entraînement (28, 30) et au moins une pompe hydraulique de traction (42) entraînée par un moteur électrique (40) pour transporter le fluide dans le circuit hydraulique de traction (38), dans lequel le circuit hydraulique de traction (38) comprend une première région de conduite (50) entre un premier raccord (52) de ladite au moins une pompe hydraulique de traction (42) et un premier raccord respectif (54, 56) de chaque moteur hydraulique de traction (46, 48) pour transporter du fluide à chaque moteur hydraulique de traction (46, 48) afin d'entraîner ledit au moins un rouleau d'entraînement (28, 30) dans un premier sens de rotation et une deuxième région de conduite (64) entre un deuxième raccord (66) dudit au moins une pompe hydraulique de traction (42) et un deuxième raccord respectif (68, 70) de chaque moteur hydraulique de traction (46, 48) pour transporter du fluide à chaque moteur hydraulique de traction (46, 48) afin d'entraîner ledit au moins un rouleau d'entraînement (28, 30) dans un deuxième sens de rotation opposé au premier sens de rotation, dans lequel un ensemble de vanne (78, 80) est prévu en association avec chaque région de conduite (50, 64) pour interrompre et libérer sélectivement une connexion d'écoulement de fluide entre ladite au moins une pompe hydraulique de traction (42) et au moins un moteur hydraulique de traction (46, 48),
**caractérisé en ce qu'**un premier dispositif de capteur de pression (86) est prévu en association avec l'ensemble de vanne (78) disposé dans la première région de conduite (50), dans lequel le premier dispositif de capteur de pression (86) comprend au moins un capteur de pression (88) pour détecter une pression de fluide dans une section de conduite (90) de la première région de conduite (50) entre le premier raccord (52) de ladite au moins une pompe hydraulique de traction (42) et l'ensemble de vanne (78) disposé dans la première région de conduite (50) et au moins un capteur de pression (92) pour détecter une pression de fluide dans une section de conduite (94) de la première région de conduite (50) entre l'ensemble de vanne (78) disposé dans la première région de conduite (50) et ledit au moins un moteur hydraulique de traction (46, 48), et/ou **en ce qu'**un deuxième dispositif de capteur de pression (96) est prévu en association avec l'ensemble de vanne (80) disposé dans la deuxième région de conduite (64), dans lequel le deuxième dispositif de capteur de pression (96) comprend au moins un capteur de pression (98) pour détecter une pression de fluide dans une section de conduite (100) de la deuxième région de conduite (64) entre le deuxième raccord (66) de ladite au moins une pompe hydraulique de traction (42) et l'ensemble de vanne (80) disposé dans la deuxième région de conduite, et au moins un capteur de pression (102) pour détecter une pression de fluide dans une section de conduite (104) de la deuxième région de conduite (64) entre l'ensemble de vanne (86) disposé dans la deuxième région de conduite (64) et ledit au moins un moteur hydraulique de traction (46, 48).

2. La machine de traitement du sol selon la revendication 1,
**caractérisé en ce que** une pluralité de rouleaux d'entraînement (28, 30) sont prévus et que chaque rouleau d'entraînement (28, 30) est associé à un moteur hydraulique de traction (46, 48), dans lequel la première région de conduite (50), associée à chaque moteur hydraulique de traction (46, 48), comprend une première conduite d'embranchement de moteur (58, 60) fournissant une connexion d'écoulement de fluide au premier raccord (52) de ladite au moins une pompe hydraulique de traction (42), et la deuxième région de conduite (64), associée à chaque moteur hydraulique de traction (46, 48), comprend une deuxième conduite d'embranchement de moteur (72, 74) fournissant une connexion d'écoulement de fluide au deuxième raccord (66) de ladite au moins une pompe hydraulique de traction (42).

3. La machine de traitement du sol selon la revendication 1 ou 2,
**caractérisé en ce que** l'ensemble de vanne (78) prévu en association avec la première région de conduite (50) comprend une première unité de valve (82), dans lequel la première unité de valve (82) est disposée en association avec la première région de conduite (50) pour interrompre et libérer sélectivement la connexion d'écoulement de fluide entre la pompe hydraulique de traction (42) et chaque moteur hydraulique de traction (46, 48), et/ou **en ce que** l'ensemble de vanne (80) prévu en association avec la deuxième région de conduite (64) comprend une deuxième unité de vanne (84), dans lequel la deuxième unité de vanne (84) est disposée en association avec la deuxième région de conduite (64) pour interrompre et libérer sélectivement la connexion d'écoulement de fluide entre la pompe hydraulique de traction (42) et chaque moteur hydraulique de traction (46, 48).

4. La machine de traitement du sol selon les revendications 2 et 3,
**caractérisé en ce que** la première région de conduite (50) comprend une première conduite principale (62) reliant les premières conduites d'embranchement de moteur (58, 60) au premier raccord (52) de ladite au moins une pompe hydraulique de traction (42) et que la première unité de vanne (82) est disposée en association avec la première conduite principale (62), et/ou **en ce que** la deuxième région de conduite (64) comprend une deuxième conduite principale (76) reliant les deuxièmes conduites d'embranchement de moteur (72, 74) au deuxième raccord (66) de ladite au moins une pompe hydraulique de traction (42) et que la deuxième unité de vanne (84) est disposée en association avec la deuxième conduite principale (76).

5. La machine de traitement du sol selon la revendication 2,
**caractérisé en ce que** l'ensemble de vanne (78) prévu dans la première région de conduite (50) comprend respectivement une première unité de vanne (82', 82") en association avec chaque moteur hydraulique de traction (46, 48) pour interrompre et libérer sélectivement la connexion d'écoulement de fluide entre ladite au moins une pompe hydraulique de traction (42) et le moteur hydraulique de traction associé respectif (46, 48), et/ou **en ce que** l'ensemble de vanne (80) prévu dans la deuxième région de conduite (64) comprend respectivement une deuxième unité de vanne (84', 84") en association avec chaque moteur hydraulique de traction (46, 48) pour interrompre et libérer sélectivement la connexion d'écoulement de fluide entre ladite au moins une pompe hydraulique de traction (42) et le moteur hydraulique de traction associé respectif (46, 48).

6. La machine de traitement du sol selon la revendication 5,
**caractérisé en ce que,** pour chaque moteur hydraulique de traction (46, 48), la première unité de vanne (82', 82") associée à ce moteur hydraulique de traction (46, 48) est disposée en association avec la première conduite d'embranchement de moteur (58, 60) reliant ce moteur hydraulique de traction (46, 48) au premier raccord (52) de ladite au moins une pompe hydraulique de traction (42), et/ou **en ce que**, pour chaque moteur hydraulique de traction (46, 48), la deuxième unité de vanne (84', 84") associée à ce moteur hydraulique de traction (46, 48) est disposée en association avec la deuxième conduite d'embranchement de moteur (72, 74) reliant ce moteur hydraulique de traction (46, 48) au deuxième raccord (66) de ladite au moins une pompe hydraulique de traction (42).

7. La machine de traitement du sol selon la revendication 5 ou 6,
**caractérisée en ce que** la première région de conduite (50) comprend une première conduite principale (62) reliant les premières conduites d'embranchement de moteur (58, 60) au premier raccord (52) de ladite au moins une pompe hydraulique de traction (42), et/ou **en ce que** la deuxième région de conduite (64) comprend une deuxième conduite principale (76) reliant les deuxièmes conduites d'embranchement de moteur (72, 74) au deuxième raccord (66) de ladite au moins une pompe hydraulique de traction (42).

8. La machine de traitement du sol selon l'une des revendications 3 à 7,
**caractérisé en ce qu'au** moins une première unité de vanne (82 ; 82', 82") et/ou au moins une deuxième unité de vanne (84 ; 84', 84") comprend une vanne proportionnelle.

9. La machine de traitement du sol selon la revendication 8,
**caractérisé en ce qu'au** moins une première unité de vanne (82 ; 82', 82") et/ou au moins une deuxième unité de vanne (84 ; 84', 84") est sous l'action d'une unité d'actionnement (44) et peut être actionnée par l'unité d'actionnement (44) pour interrompre et libérer sélectivement la connexion d'écoulement de fluide entre ladite au moins une pompe hydraulique de traction (42) et ledit au moins un moteur hydraulique de traction (46, 48).

10. La machine de traitement du sol selon la revendication 8 ou 9,
**caractérisé en ce qu'au** moins une première unité de vanne (82 ; 82', 82") et/ou au moins une deuxième unité de vanne (84 ; 84', 84") est commandée par pression, dans lequel en association à chaque première unité de vanne commandée par pression (82 ; 82', 82") et chaque deuxième unité de vanne commandée par pression (84 ; 84', 84") une vanne d'actionnement (110, 112) sous l'action d'une unité d'actionnement (44) est prévue pour appliquer une pression de commande à l'unité de vanne attribuée de la première unité de vanne (82 ; 82', 82") et de la deuxième unité de vanne (84 ; 84', 84") pour interrompre et libérer sélectivement la connexion d'écoulement de fluide entre ladite au moins une pompe hydraulique de traction (42) et au moins un moteur hydraulique de traction (46, 48).

11. La machine de traitement du sol selon l'une des revendications 3 à 10,
**caractérisé en ce qu'au** moins une première unité de vanne (82 ; 82', 82") et/ou au moins une deuxième unité de vanne (84 ; 84', 84") est une unité de vanne normalement fermée.

12. La machine de traitement du sol selon l'une des revendications 1 à 11,
**caractérisé en ce que** l'ensemble de vanne (78) prévu en association à la première région de conduite (50) comprend au moins une vanne de surpression (118, 120) pour renvoyer du fluide audit au moins un moteur hydraulique de traction (46, 48) lorsqu'une pression limite de fluide est dépassée dans la première région de conduite (50), et/ou **en ce que** l'ensemble de vanne (80) prévu en association avec la deuxième région de conduite (64) comprend au moins une vanne de surpression (122, 124) pour renvoyer du fluide audit au moins un moteur hydraulique de traction (46, 48) lorsqu'une pression limite de fluide est dépassée dans la deuxième région de conduite (64).

13. La machine de traitement du sol selon la revendication 12, si l'on se réfère à la revendication 3 ou à la revendication 5,
**caractérisé en ce que** l'ensemble de vanne (78) prévu en association avec la première région de conduite (50), en association avec une section de conduite (90) de la première région de conduite (50) entre ladite au moins une pompe hydraulique de traction (42) et chaque première unité de vanne (82 ; 82', 82"), comprend une première vanne de surpression (118) et, en association avec une section de conduite (94) entre chaque première unité de vanne (82 ; 82', 82") et ledit au moins un moteur hydraulique de traction (46, 48), comprend une deuxième vanne de supression (120), et/ou **en ce que** l'ensemble de vanne (80) prévu en association avec la deuxième région de conduite (64), en association avec une section de conduite (100) de la deuxième région de conduite (64) entre ladite au moins une pompe hydraulique de traction (42) et chaque deuxième unité de vanne (84 ; 84', 84"), comprend une troisième vanne de décharge (122) et, en association avec une section de conduite (104) entre chaque deuxième unité de vanne (84 ; 84', 84") et au moins un moteur hydraulique de traction (46, 48), comprend une quatrième vanne de surpression (124).

14. Machine de traitement du sol selon la revendication 5 ou l'une des revendications 6 à 13, si l'on se réfère à la revendication 5,
**caractérisé en ce que** le premier dispositif de capteur de pression (86) comprend, en association avec chaque première conduite d'embranchement de moteur (58, 60), un capteur de pression respectif (92', 92") pour détecter une pression de fluide dans une section de conduite d'une première conduite d'embranchement de moteur respective (58, 60) entre la première unité de vanne (82', 82") qui lui est associée et le moteur hydraulique de traction (46, 48) qui lui est associé, et/ou **en ce que** le deuxième ensemble de capteurs de pression (96) comprend respectivement, en association avec chaque deuxième conduite d'embranchement de moteur (72, 74), un capteur de pression (102', 102") pour détecter une pression de fluide dans une section de conduite d'une deuxième conduite d'embranchement de moteur respectif (72, 74) entre la deuxième unité de vanne (84', 84") qui lui est associée et le moteur hydraulique de traction (46, 48) qui lui est associé.

15. La machine de traitement du sol selon l'une des revendications 1 à 14,
**caractérisé en ce qu**'en association avec au moins un, de préférence chaque rouleau d'entraînement (28, 30), un capteur de vitesse (106, 108) est prévu pour fournir des informations sur la vitesse représentant la vitesse d'un rouleau d'entraînement respectif (28, 30).

16. La machine de traitement du sol selon l'une des revendications 1 à 15,
**caractérisé en ce qu'au moins** un rouleau d'entraînement (28, 30) comprend un rouleau de traitement du sol (20, 32) ayant un boîtier métallique (22, 34), et/ou **en ce qu'**au moins un rouleau d'entraînement (28, 30) comprend au moins une roue d'entraînement (18), de préférence une paire de roues d'entraînement, et/ou **en ce qu'**au moins un rouleau d'entraînement (28, 30) comprend au moins un rouleau à roues en caoutchouc, de préférence une paire de rouleaux à roues en caoutchouc.

17. Un procédé de fonctionnement d'une machine de traitement du sol (10) selon l'une des revendications précédentes, comprenant les mesures suivantes :
c) à l'état d'arrêt, faire passer l'ensemble de vanne (78) disposé dans la première région de conduite (50) à un état de blocage interrompant l'écoulement du fluide dans la première région de conduite (50) et faire passer l'ensemble de vanne (80) disposé dans la deuxième région de conduite à un état de blocage interrompant l'écoulement du fluide dans la deuxième région de conduite (64),
d) à l'état d'arrêt, détection d'une première pression de fluide dans une section de conduite (94) de la première région de conduite (50) entre l'ensemble de vanne (78) disposé dans la première région de conduite (50) et ledit au moins un moteur hydraulique de traction (46, 48) et détection d'une deuxième pression de fluide dans une section de conduite (104) de la deuxième région de conduite (64) entre l'ensemble de vanne (80) disposé dans la deuxième région de conduite (64) et au moins un moteur hydraulique de traction (46, 48),
e) à la fin de l'état d'arrêt pour la transition vers un état de conduite, actionner le moteur électrique (40) associé à au moins une pompe hydraulique de traction (42), en tenant compte de la première pression de fluide détectée dans la mesure d) ou de la deuxième pression de fluide détectée dans la mesure d).

18. La méthode selon la revendication 17, comprenant en outre les mesures suivantes :
a) dans un état d'entraînement, entraîner ladite au moins une pompe hydraulique de traction (42) de manière à ce que le fluide soit transporté par une région de conduite de la première région de conduite (50) et de la deuxième région de conduite (64) vers ledit au moins un moteur hydraulique de traction (46, 48) et que le fluide retourne par l'autre région de conduite de la première région de conduite (50) et de la deuxième région de conduite (64) vers ladite au moins une pompe hydraulique de traction (42),
b) dans un état de freinage suivant l'état d'entraînement, interrompre ou étrangler un écoulement de fluide dans l'autre région de conduite au moyen de l'ensemble de vanne (78, 80) disposé dans l'autre région de conduite.

19. La méthode selon la revendication 18,
**caractérisé en ce que,** dans la mesure a), l'ensemble de vanne (78) disposé dans la première région de conduite (50) est dans un état ouvert qui n'étrangle pas l'écoulement de fluide dans la première région de conduite (50) et l'ensemble de vanne (80) disposé dans la deuxième région de conduite (64) est dans un état ouvert qui n'étrangle pas l'écoulement de fluide dans la deuxième région de conduite (64).

20. La méthode selon l'une des revendications 17 à 19,
**caractérisé en ce que** dans la mesure e), le moteur électrique (40) associé à ladite au moins une pompe hydraulique de traction (42) est actionné en tenant compte de la pression de fluide la plus élevée parmi la première pression de fluide et la deuxième pression de fluide.

21. La méthode selon la revendication 20,
**caractérisé en ce que** dans la mesure d) et/ou la mesure e), une troisième pression de fluide dans une section de conduite (90) de la première région de conduite (50) entre ladite au moins une pompe hydraulique de traction (42) et l'ensemble de vanne (78) disposé dans la première région de conduite (50) et/ou une quatrième pression de fluide dans une section de conduite (100) de la deuxième région de conduite (64) entre ladite au moins une pompe hydraulique de traction (42) et l'ensemble de vanne (80) disposé dans la deuxième région de conduite (64) est détectée, et en ce qui concerne la mesure e), si la première pression de fluide est supérieure à la deuxième pression de fluide, le moteur électrique (40) associé à la deuxième région de conduite (64) est actionné pour transporter du fluide dans la première région de conduite (50) de telle sorte que la troisième pression de fluide corresponde essentiellement à la première pression de fluide, et que dans la mesure e), si la deuxième pression de fluide est supérieure à la première pression de fluide, le moteur électrique (40) associé à ladite au moins une pompe hydraulique de traction (42) est actionné pour transporter du fluide dans la deuxième région de conduite (64) de telle sorte que la quatrième pression de fluide corresponde essentiellement à la deuxième pression de fluide.

22. La méthode selon la revendication 21,
**caractérisé en ce que,** dans la mesure e), les ensembles de vanne (78, 80) passent de l'état de blocage à l'état ouvert lorsque la troisième pression de fluide correspond essentiellement à la première pression de fluide ou lorsque la quatrième pression de fluide correspond essentiellement à la deuxième pression de fluide.

23. La méthode selon la revendication 22,
**caractérisé en ce qu**'après que l'ensemble de vanne (78, 80) a été mis à l'état ouvert, le moteur électrique associé à ladite au moins une pompe hydraulique de traction est actionnée pour augmenter encore la pression du fluide.

24. La méthode selon l'une des revendications 17 à 23, comprenant en outre les mesures suivantes :
f) dans un état d'entraînement, entraînant ladite au moins une pompe hydraulique de traction (42) de telle sorte que le fluide soit transporté via une région de conduite de la première région de conduite (50) et de la deuxième région de conduite (64) vers un premier moteur hydraulique de traction (46) associé à un premier rouleau d'entraînement (28) et vers un deuxième moteur hydraulique de traction (48) associé à un deuxième rouleau d'entraînement (30) et le fluide retourne via l'autre région de conduite de la première région de conduite (50) et de la deuxième région de conduite (64) du premier moteur hydraulique de traction (46) et du deuxième moteur hydraulique de traction (48) vers ladite au moins une pompe hydraulique de traction (42),
g) dans l'état d'entraînement, fournir des informations sur l'état de glissement en fonction des premières informations sur la vitesse représentant la vitesse du premier rouleau d'entraînement (28) et/ou des deuxièmes informations sur la vitesse représentant la vitesse du deuxième rouleau d'entraînement (30),
h) si les informations sur l'état de glissement indiquent une vitesse excessivement élevée dans un rouleau d'entraînement du premier rouleau d'entraînement (28) et du deuxième rouleau d'entraînement (30) par rapport à l'autre rouleau d'entraînement du premier rouleau d'entraînement (28) et du deuxième rouleau d'entraînement (30), étrangler l'écoulement de fluide vers le moteur hydraulique de traction du premier moteur hydraulique de traction (46) et du deuxième moteur hydraulique de traction (48) au moyen de l'ensemble de vanne (78) disposé dans la première région de conduite (50) et/ou de l'ensemble de vanne (80) disposé dans la deuxième région de conduite (64).

25. La méthode selon la revendication 24,
**caractérisé en ce que,** dans la mesure h), l'écoulement de fluide vers le moteur hydraulique de traction associé à un rouleau d'entraînement du premier moteur hydraulique de traction (46) et du deuxième moteur hydraulique de traction (48) est étranglé au moyen de l'ensemble de vanne (78, 80) disposé dans l'autre région de conduite de la première région de conduite (50) et de la deuxième région de conduite (64).

26. La méthode selon la revendication 24 ou 25,
**caractérisé en ce que** dans la mesure h), l'ensemble de vanne (78) disposé dans la première région de conduite (50) et/ou l'ensemble de vanne (80) disposé dans la deuxième région de conduite (64) est actionné pour étrangler l'écoulement de fluide vers le moteur hydraulique de traction associé à l'un des rouleaux d'entraînement si les informations de vitesse des premières informations de vitesse et des deuxièmes informations de vitesse indiquent une vitesse supérieure à une vitesse cible du rouleau d'entraînement associé, la vitesse cible étant déterminée sur la base des premières informations de vitesse et/ou des deuxièmes informations de vitesse.
